(19) Europäisches Patentamt
European Patent Office
Office européen des brevets

(11) **EP 4 425 871 B1**

(12) **EUROPEAN PATENT SPECIFICATION**

(45) Date of publication and mention
of the grant of the patent:
**11.03.2026 Bulletin 2026/11**

(21) Application number: **22966010.5**

(22) Date of filing: **30.12.2022**

(51) International Patent Classification (IPC):
**H04L 43/08** (2022.01)     **H04L 45/00** (2022.01)
**H04L 47/28** (2022.01)

(52) Cooperative Patent Classification (CPC):
**H04L 43/0852; H04L 47/28; H04L 47/283;**
H04L 43/0894

(86) International application number:
**PCT/CN2022/143921**

(87) International publication number:
**WO 2024/138634 (04.07.2024 Gazette 2024/27)**

(54) **DETERMINISTIC FLOW CROSS-DOMAIN TRANSMISSION METHOD AND APPARATUS, AND ELECTRONIC DEVICE**

VERFAHREN UND VORRICHTUNG ZUR DETERMINISTISCHEN FLUSS-ÜBERGREIFENDEN ÜBERTRAGUNG SOWIE ELEKTRONISCHE VORRICHTUNG

PROCÉDÉ ET APPAREIL DE TRANSMISSION DE DOMAINE CROISÉ DE FLUX DÉTERMINISTE, ET DISPOSITIF ÉLECTRONIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**04.09.2024 Bulletin 2024/36**

(73) Proprietor: **New H3C Technologies Co., Ltd. Hangzhou, Zhejiang 310052 (CN)**

(72) Inventor: **GUO, Daorong Beijing 100102 (CN)**

(74) Representative: **Grünecker Patent- und Rechtsanwälte PartG mbB Leopoldstraße 4 80802 München (DE)**

(56) References cited:
**EP-A1- 4 329 262     WO-A1-2022/237415**
**CN-A- 113 382 442     CN-A- 113 711 572**
**CN-A- 115 348 216     US-A1- 2019 132 253**

## Description

### TECHNICAL FIELD

The present disclosure relates to the field of network communication and in particular to a cross-domain transmission method and apparatus of a DetNet flow and an electronic device.

### BACKGROUND

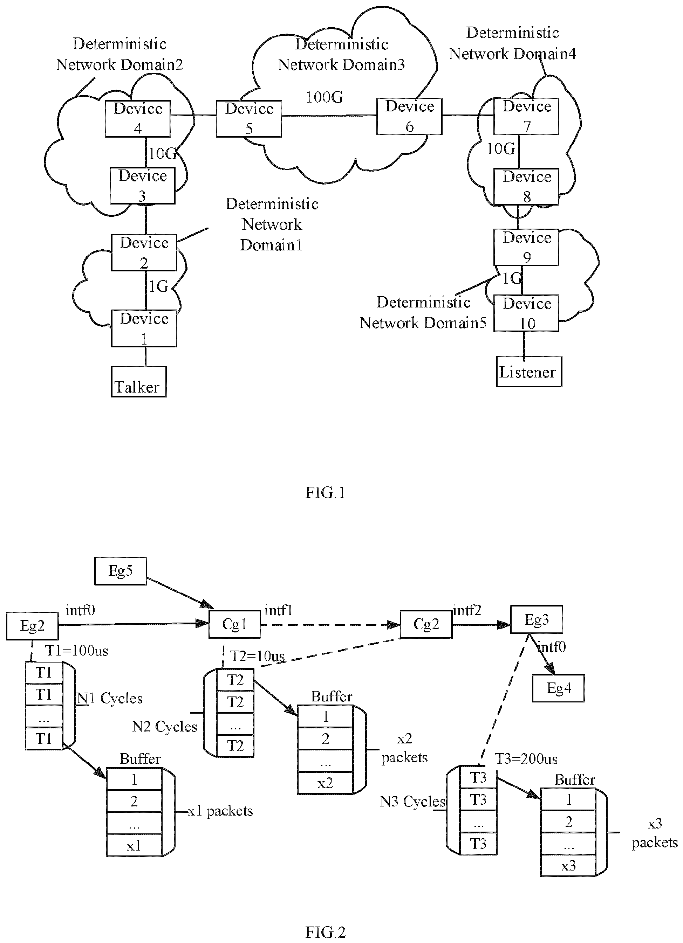

DetNet (Deterministic Network) flows are usually transmitted across DetNet domains. For example, a DetNet flow sent by an end (Talker) shown in FIG. 1 runs through several interconnected DetNet domains to the other end (Listener). But, different DetNet domains, for example, an access network, a converged network and a core network etc. shown in FIG. 1, may have different planned scheduling cycles, which may lead to inability to perform strict scheduling cycle mapping during transmission of the DetNet flow, thereby affecting transmission of the DetNet flow. WO 2022/237415 A1 discloses a packet forwarding method and a related apparatus. The method may comprise: a first device receives a first packet sent by a second device in a second period; and the first device determines a target period corresponding to the first packet according to period correction information and a periodic mapping relationship corresponding to the first packet, and forwards the first packet in a target period corresponding to the first packet. The periodic mapping relationship comprises a mapping relationship between a first period and the second period, and the first period represents a forwarding period determined based on the periodic mapping relationship. By introducing the periodic correction information, i.e., correcting or adjusting the forwarding period determined on the basis of the periodic mapping relationship, the time for actually forwarding the packet can be flexibly adjusted, thereby ensuring the end-to-end deterministic delay and jitter as much as possible.

### SUMMARY

It is therefore the object of the present invention to provide an improved cross-domain transmission method of a DetNet flow, applied to a network node in a DetNet domain, as well as a corresponding device and a machine readable storage medium that stores machine executable instructions to implement a corresponding method.
This object is solved by the subject matter of the independent claims 1, 13 and 14.
Preferred embodiments are defined by the dependent claims.
Embodiments of the present disclosure provide a cross-domain transmission method and apparatus of a DetNet flow and an electronic device, so as to achieve transmission of the DetNet flow across DetNet domains.
According to the solutions of the present disclosure, the egress node in the last determinist network domain that the DetNet-flow data packet passes through can, based on the actual transmission latency $\Delta t'_n$ of the received DetNet-flow data packet in the present DetNet domain and the actual transmission latencies that the DetNet-flow data packet passes through other DetNet domains, perform time compensation for the DetNet-flow data packet so as to achieve reliable transmission of the DetNet-flow data packet.
Furthermore, in the embodiments of the present disclosure, it is not required to synchronize the clocks of multiple DetNet domains that the DetNet-flow data packet passes through, which facilitates construction of a large-scale deterministic network and greatly reduces deployment difficulty.

### BRIEF DESCRIPTION OF THE DRAWINGS

The accompanying drawings, which are incorporated in and constitute a part of the present specification, illustrate examples consistent with the present disclosure and serve to explain the principles of the present disclosure together with the specification.

FIG 1 is a schematic diagram illustrating cross-domain transmission of a DetNet flow according to an embodiment of the present disclosure.
FIG. 2 is a schematic diagram for planning a scheduling cycle according to an embodiment of the present disclosure.
FIG. 3 is a schematic diagram illustrating a cross-domain interconnection mathematical model according to an embodiment of the present disclosure.
FIG. 4 is a schematic diagram illustrating reference latencies of different DetNet domains according to an embodiment of the present disclosure.
FIG. 5 is a schematic diagram illustrating clock sources of different DetNet domains according to an embodiment of the present disclosure.
FIG. 6 is a network diagram of cross-domain transmission of a DetNet-flow data packet according to an embodiment of the present disclosure.

FIG. 7 is a schematic diagram illustrating DCTIList information according to an embodiment of the present disclosure.

FIG. 8 is a structural diagram illustrating a reference latency measurement packet constructed according to an embodiment of the present disclosure.

FIG. 9 is another structural diagram illustrating a reference latency measurement packet according to an embodiment of the present disclosure.

FIG. 10 is a structural diagram of a DetNet-flow information table according to an embodiment of the present disclosure.

FIG. 11 is a schematic diagram of cross-domain transmission according to an embodiment of the present disclosure.

FIG. 12 is a structural schematic diagram illustrating a packet 110 according to an embodiment of the present disclosure.

FIG. 13 is a schematic diagram illustrating application of an elastic buffer according to an embodiment of the present disclosure.

FIG. 14 is a schematic timing diagram of tReady and $\Delta t$ according to an embodiment of the present disclosure.

FIG. 15 is a structural schematic diagram illustrating a packet 111 according to an embodiment of the present disclosure.

FIG. 16 is a schematic diagram illustrating time compensation according to an embodiment of the present disclosure.

FIG. 17 is a structural diagram illustrating an apparatus according to an embodiment of the present disclosure.

FIG. 18 is a structural diagram illustrating an electronic device according to an embodiment of the present disclosure.

## DETAILED DESCRIPTION OF THE EMBODIMENTS

Exemplary embodiments will be described in detail herein, with the illustrations thereof represented in the accompanying drawings. When the following descriptions involve the accompanying drawings, same numerals in the different drawings refer to same or similar elements unless otherwise indicated. The embodiments described in the following examples do not represent all embodiments consistent with the present disclosure. Rather, they are merely examples of apparatuses and methods consistent with some aspects of the present disclosure.

The terms used in the present disclosure are used only to describe a particular embodiment rather than limit the present disclosure. Terms "a", "the" and "said" in singular form used in the present disclosure also aim to include plural, unless otherwise clearly indicated in the context.

For a same DetNet domain, for example, a Cycle Specified Queuing and Forwarding (CSQF) domain and the like, each node may have a same scheduling cycle plan but nodes in different DetNet domains may have different scheduling cycle plans. For example, as shown in FIG. 2, Cg1 and Cg2 belong to a same DetNet domain (denoted as domain 23), and the scheduling cycle plan of the egress interface (denoted as intf1) on the Cg1 and the egress interface (denoted as intf2) on the Cg2 may be same. A time length (also called width) of a scheduling cycle is T2 (e.g. 10us), where x2 packets may be buffered in each scheduling cycle. For another example, Eg2, Cg1 and Eg3 belong to different DetNet domains, and the scheduling cycle plan of the egress interface (denoted as intf0) on the Eg2, the egress interface (denoted as intf1) on the Cg1, and the egress interface (denoted as intf0) on the Eg3 may be different: the time length of the scheduling cycle of the egress interface intf0 on Eg2 is T1 (e.g. 100us) and x1 packets may buffered in each scheduling cycle; the time length of the scheduling cycle of the egress interface intf1 on Cg1 is T2 (e.g. 10us) and x2 packets may be buffered in each scheduling cycle; the time length of the scheduling cycle of the egress interface intf0 on Eg3 is T3 (e.g. 200us) and x3 packets may be buffered in each scheduling cycle.

There may be different scheduling cycle plans for different DetNet domains. Coupled with the fact that the clocks of different DetNet domains may be unsynchronized, it is difficult to establish a fixed mapping relationship between different nodes of different DetNet domains when a DetNet flow is transmitted across the DetNet domains, thus affecting cross-domain transmission of the DetNet flow. Based on this, an embodiment of the present disclosure provides a cross-domain transmission method of a DetNet flow to achieve cross-domain transmission of the DetNet flow.

For ease of understanding, a mathematical model of cross-domain transmission is firstly described below.

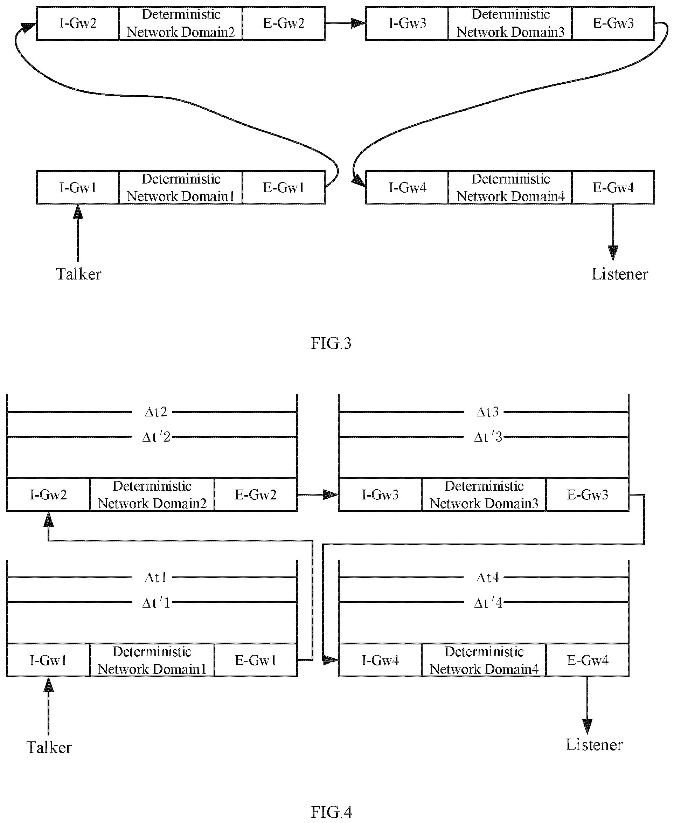

By abstracting and simplifying multiple DetNet domains, a cross-domain interconnection mathematical model shown in FIG. 3 may be obtained. As shown in FIG. 3, the DetNet flow is transmitted starting from Talker and reaches the Listener through four interconnected DetNet domains.

Due to inconsistent clock domains and wide geographically span, different DetNet domains are difficult to achieve time synchronization over the entire network. In this case, it may be first considered to perform domain-specific timing on reference latencies of the each DetNet domain in a deterministic transmission path as shown in FIG. 4.

Herein, the reference latency of each DetNet domain may be a maximum transmission latency in the DetNet domain. As shown in FIG. 4, let $\Delta t_1$ be a reference latency of a DetNet domain 1, $\Delta t_2$ be a reference latency of a DetNet domain 2, $\Delta t_3$ be a reference latency of a DetNet domain 3, and $\Delta t_4$ be a reference latency of a DetNet domain 4. Here, for a DetNet domain, for example, a TSN domain or a CSQF domain, the reference latency of this DetNet domain may be obtained, which will be exemplified below.

Based on the reference latencies of a DetNet-flow data packet when passing through different DetNet domains, considering that the DetNet-flow data packet subjects to frequency offset when passing through different DetNet domains, in this embodiment, a reference latency (called candidate global reference latency) of the DetNet-flow data packet in the entire transmission path may be expressed in the following formula: $tref = tfix + k_1 * \Delta t_1 + k_2 * \Delta t_2 + k_3 * \Delta t_3 + \Delta t_4$.

In the above formula, tref represents the above candidate global reference latency; tfix represents an inter-domain transmission latency between different DetNet domains in the above transmission path, which is generally relatively small and may be approximate to a fixed constant. $k_1$, $k_2$ and $k_3$ are the timing ratios of the first three DetNet domains to the DetNet domain 4 where the E-gw4 is located, respectively, which will be exemplified below and not be described herein.

It should be noted that, in this embodiment, if the transmission path of the above DetNet-flow data packet and other k-1 paths are mutually equivalent paths to realize packet replication, elimination and ordering functions (PREOF), one candidate global reference latency with a largest value is selected from the candidate global reference latencies of all equivalent paths and then taken as a target global reference latency of each path in all equivalent paths. Finally, the target global reference latency (denoted as S_tref) of each path in all equivalent paths is expressed as follows:

$$S\_tref = MAX\ (tref_1, tref_2 \ldots tref_k).$$

In the above formula, $tref_k$ represents a candidate global reference latency of the k-th path in all equivalent paths.

It can be seen that in this embodiment, the target global reference latency of each path in all equivalent paths may not be the candidate global reference latency actually measured on itself but a candidate global reference latency with a largest value in the candidate global reference latencies of all equivalent paths, so as to ensure the data packets transmitted in each of the equivalent paths have the same target global reference latency, thus reducing jitter.

Of course, if the transmission path of the above DetNet-flow data packet does not have equivalent paths, the candidate global reference latency of the transmission path may be directly determined as the target global reference latency (S_tref) of the transmission path.

The actual transmission latency in each DetNet domain is described below.

The actual transmission latency of the DetNet-flow data packet in each DetNet domain is changeable, and the actual transmission latency may be specifically determined based on a difference between an entry time point that the DetNet-flow data packet enters a DetNet domain during actual transmission and a leaving time point that the DetNet-flow data packet leaves the DetNet domain during the actual transmission. The actual transmission latency of the DetNet-flow data packet in the DetNet domain may be obtained during transmission of the DetNet flow, which will be exemplified below and will not be described herein.

As shown in FIG. 4, let $\Delta t'_1$ be the actual transmission latency of the DetNet-flow data packet in the DetNet domain 1, $\Delta t'_2$ be the actual transmission latency of the DetNet-flow data packet in the DetNet domain 2, $\Delta t'_3$ be the actual transmission latency of the DetNet-flow data packet in the DetNet domain 3, $\Delta t'_4$ be the actual transmission latency of the DetNet-flow data packet in the DetNet domain 4.

Based on the above descriptions, the actual transmission latency (referred to as path transmission latency for short) of the DetNet-flow data packet in the entire transmission path may be:

$$trel = tfix + k_1 * \Delta t'_1 + k_2 * \Delta t'_2 + k_3 * \Delta t'_3 + \Delta t'_4.$$

In the above formula, trel represents the above path transmission latency, and tfix, $k_1$, $k_2$ and $k_3$ are as mentioned above.

In this embodiment, based on the above path transmission latency and the target global reference latency, the egress node (for example, E-gw4) in the last DetNet domain (for example, the DetNet domain 4 as shown in FIG. 3 or 4) which the DetNet-flow data packet passes through may determine to-be-actually-compensated time tc of the above DetNet-flow data packet in the entire transmission path.

As an embodiment, tc may be expressed in the following formula:

$$tc = S\_tref - trel$$
$$= (S\_tref - tfix) - (k_1 * \Delta t'_1 + k_2 * \Delta t'_2 + k_3 * \Delta t'_3 + \Delta t'_4).$$

It should be noted that, in this embodiment, if the transmission path of the above DetNet-flow data packet and other k-1 paths are equivalent paths to achieve PREOF, the actual transmission latency of any path i (also called path transmission latency) in all equivalent paths can be expressed as follows: $trel_i = tfix_i + k_{1i} * \Delta t'_{1i} + k_{2i} * \Delta t'_{2i} + k_{3i} * \Delta t'_{3i} + \Delta t'_{4i}$, and the to-be-actually-compensated time $tc_i$ of the above DetNet-flow data packet in the path i, which is determined by the egress node of the last DetNet domain on the path i, can be expressed as follows:

$$tc_i = (S\_tref - tfix_i) - (k_{1i} * \Delta t'_{1i} + k_{2i} * \Delta t'_{2i} + k_{3i} * \Delta t'_{3i} + \Delta t'_{4i}).$$

As an extension, assuming that the transmission path of the above DetNet-flow data packet going through 4 DetNet domains is extended to going through n DetNet domains, if the transmission path of the DetNet-flow data packet and other k-1 paths are mutually equivalent paths, the target global reference latency of the transmission path of the DetNet flow may be:

$$S\_tref = MAX(tref_1, tref_2 \ldots tref_k) \text{ (global reference latency formula 1)};$$

where the candidate reference latency $tref_i$ of any path i in the equivalent paths is: $tref_i = tfix_i + k_{1i} * \Delta t_1 + k_{2i} * \Delta t_{2i} + \ldots + k_{n-1i} * \Delta t_{n-1i} + \Delta t_{ni}$.

Based on the above formula of the to-be-compensated time, the to-be-actually-compensated time $tc_i$ determined by the egress node, for example, E-gw4, of the last DetNet domain that any path i in the equivalent paths passes through may be:

$$tc_i = (S\_tref - tfix_i) - (k_{1i} * \Delta t'_{1i} + k_{2i} * \Delta t'_{2i} + \ldots + k_{n-1i} * \Delta t'_{n-1i} + \Delta t'_{ni}).$$

In the above descriptions, $k_{1i}$ represents a timing ratio of the first DetNet domain that the path i passes through to the last DetNet domain that the path i passes through, and so on. $\Delta t'_{1i}$ represents the actual transmission latency of the first DetNet domain of the path i that the DetNet-flow data packet passes through, and so on.

Since the timing ratios of a same DetNet domain in different transmission paths to a same target network domain (the last DetNet domains of different transmission paths are the same) may regarded as be approximately the same, the above $tc_i$ may be further simplified as:

$$tc = (S\_tref - tfix_i) - (k_1 * \Delta t'_{1i} + k_2 * \Delta t'_{2i} + \ldots + k_{n-1} * \Delta t'_{n-1i} + \Delta t'_{ni}) \text{ (latency compensation}$$

$$\text{formula 1)}.$$

Of course, if the transmission path of the DetNet-flow data packet has no equivalent path, the target global reference latency of the transmission path of the DetNet-flow data packet may be:

$$S\_tref = tfix + (k_1 * \Delta t_1 + k_2 * \Delta t_2 + \ldots + k_{n-1} * \Delta t_{n-1} + \Delta t_n) \text{ (global reference latency formula}$$

$$2);$$

Based on the above formula of the to-be-compensated time tc, to-be-actually-compensated time tc determined by the egress node, for example, the above E-gw4, of the last DetNet domain that the DetNet-flow data packet passes through may be:

$$tc = (S\_tref - tfix) - (k_1 * \Delta t'_1 + k_2 * \Delta t'_2 + \ldots + k_{n-1} * \Delta t'_{n-1} + \Delta t'_n) \text{ (latency compensation}$$

$$\text{formula 2)}.$$

After determining the to-be-actually-compensated time tc of the DetNet flow in the entire transmission path, the egress node of the last DetNet domain (for example, the E-gw4 of the above DetNet domain 4) may, based on the tc, determine a corresponding scheduling cycle to schedule transmission of the DetNet flow. Relevant details will be described below and no redundant descriptions are made herein.

Analysis on obtaining the above $k_1$, $k_2$, $k_3$, ... and kn-1 is made below.

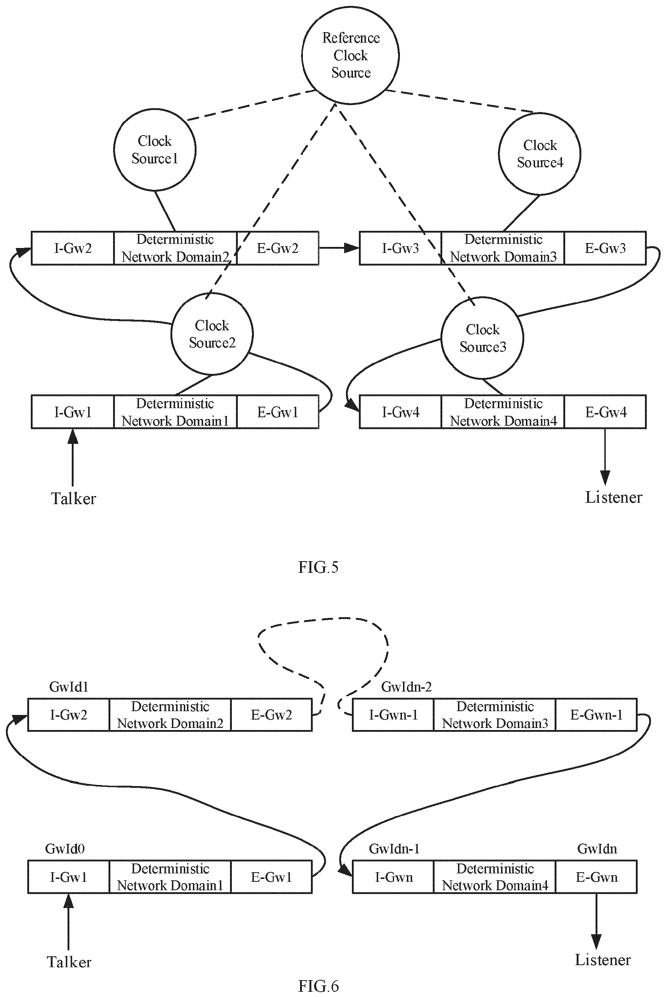

As shown in FIG. 5, for the transmission path of any DetNet-flow data packet, any DetNet domain that the transmission path passes through has one clock source (provided by a clock plane or test instrument online or offline) and each node in a same DetNet domain in the transmission path may perform clock synchronization based on the clock source in the same DetNet domain. Furthermore, in order to determine $k_1$, $k_2$, $k_3$, ... and $k_{n-1}$, as shown in FIG. 5, one clock source may be specified as a reference clock source in this embodiment. The reference clock source may be a clock source of any DetNet domain, or a specified clock source independent of any DetNet domain, which is not limited herein in this embodiment.

Therefore, in this embodiment, it is assumed that a time ratio of the specified reference clock source to the clock source in the DetNet domain 1 is $k'_1$, a time ratio of the specified reference clock source to the clock source in the DetNet domain 2 is $k'_2$, a time ratio of the specified reference clock source to the clock source in the DetNet domain 3 is $k'_3$, and a time ratio of the specified reference clock source to the clock source in the DetNet domain 4 is $k'_4$, and so on. $k'_1$, $k'_2$, $k'_3$, $k'_4$... can be obtained offline before path planning.

Afterwards, $k_1$ may be determined based on $k'_1$ and $k'_n$, for example, $k_1 = k'_1/k'_n$; $k_2$ may be determined based on $k'_2$ and $k'_n$, for example, $k_2 = k'_2/k'_n$; $k_3$ may be determined based on $k'_3$ and $k'_n$, for example, $k_3 = k'_3/k'_n$, and so on. $k'_n$ refers to a time ratio of the specified reference clock source to the clock source in the last DetNet domain.

It should be noted that, usually, the latency change of each DetNet domain is relatively small. For most DetNet flows, a timing offset between each of the DetNet domains may be negligible, that is, the above $k'_1$, $k'_2$, $k'_3$, $k'_4$... $k'_n$ may be considered as 1. For example, if a to-be-compensated latency of a certain DetNet domain is 2ms, but the offset caused by timing is 0.2us, which is one ten-thousandth of the above latency 2ms. If the latency jitter of the DetNet flow is to be above 20us, the above timing offset may be completely negligible, that is, the above $k'_1$, $k'_2$, $k'_3$, $k'_4$... $k'_n$ may be considered as 1.

The above descriptions are made to the mathematical model of cross-domain transmission. The following descriptions will be made on collecting the reference latencies in the DetNet domains.

If the transmission path of the DetNet-flow data packet passes through n DetNet domains, and an ingress node of the DetNet-flow data packet in each DetNet domain is as shown in FIG. 6. For example, based on a sequence that the DetNet flow passes, the ingress node in each DetNet domain shown in FIG. 6 is marked as GwId0, GwId1, ..., GwIdn-1 sequentially.

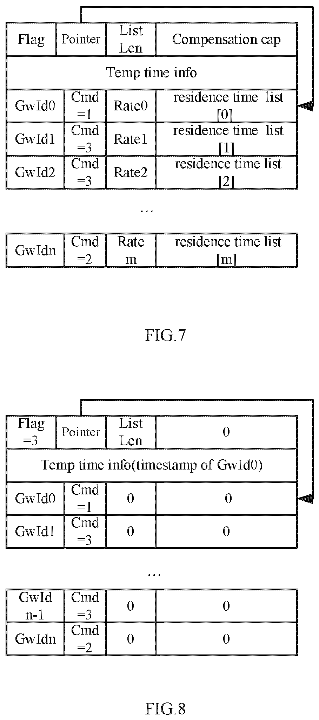

Before collection of the reference latency in each DetNet domain is described in this embodiment, a structure of deterministic latency compensation information (DCTIList) shown in FIG. 7 in this embodiment is firstly described.

As shown in FIG. 7, the DCTIList information may include the followings.

1) Flag field, which may occupy three bits. If the flag is set to a value1, for example, 0, it means no time compensation is required. For example, for a service flow without the need of consideration on jitter, it does not need time compensation. When the flag is set to a value2, for example, 1, it means frequency offset (Rate) is neglected; when the flag is set to a value3, for example, 2, it means the frequency offset cannot be neglected; when the flag is set to a value4, for example, 3, it means collecting the reference latencies of each of the DetNet domains.

2) Pointer, which may occupy three bits. It indicates that up to eight DetNet domains can be passed through. Pointer is used to point to a to-be-processed information item. In this embodiment, the ingress node in each DetNet domain that the transmission path passes through has a corresponding information item (namely, each DetNet domain has a corresponding information item), and the egress node in the last DetNet domain has a corresponding information item. Each information item at least includes a node identifier (specifically, ingress node identifier, with gateway GwId as an example) field, an operation instruction (Cmd) field, a frequency offset field, and a latency field (residence time list), which will be described below and no redundant descriptions are made herein.

Applied to an ingress node in any DetNet domain, this node may enable the Pointer to point to a next information item of a current information item corresponding to this node. For example, if this node is an ingress node other than the ingress node in the last DetNet domain, the current information item is an information item corresponding to this node, and the next information item is an information item corresponding to the ingress node in a next DetNet domain; if this node is an ingress node in the last DetNet domain, the current information item is an information item corresponding to this node, and the next information item is an information item corresponding to an egress node in the last DetNet domain. For details, reference may be made to the structure of the DCTIList information shown in FIG. 7. Exemplary descriptions will be made below and no redundant descriptions made herein.

3) ListLen (length) field, which may occupy three bits. Specifically, it refers to the number of the information items contained in the DCTIList information, and eight information items are supported at most.

4) Compensation cap (upper limit of compensation) field, which may occupy 32 bits. It indicates the maximum number of nanoseconds to be compensated. Specifically, it can be calculated in the latency compensation formula 1 (S_tref-tfix$_i$) or the latency compensation formula 2 (S_tref-tfix). Once a certain transmission path is selected, the Compensation cap can be determined, which will be detailed below.

5) Temp time info (time information) field, which is used to indicate a time point of entering a DetNet domain.

Specifically, the time point may be a time point (denoted as packet reception time point) that an ingress node in the DetNet domain receives a packet, for example, a DetNet-flow data packet or a reference latency measurement packet. For example, when the I-Gw shown in FIG. 6 receives the DetNet-flow data packet, it may record the packet reception time point of the DetNet-flow data packet into the temp time info field. The temp time info field may occupy 64 bits.

6) Node identifier field: with GwIdID (gateway identifier) as an example, it may occupies 19 bits.

7) Cmd (operation instruction) field, which may occupies 2 bits, meaning a to-be-executed operation command.

As an embodiment, if the Cmd field is set to an instruction value a1, for example, 1, it indicates to record the time point (denoted as packet reception time point) of receiving the packet, for example, the DetNet-flow data packet or the reference latency measurement packet, into the temp time info field. If the Cmd is set to an instruction value a1 for example, 1, the operation is usually performed by the ingress node in the first DetNet domain (such as GwId0 shown in FIG. 6).

If the Cmd field is set to an instruction value a2, for example, 2, it indicates to determine a latency of the packet, for example, the DetNet-flow data packet or the reference latency measurement packet, in the current DetNet domain. In an application to a scenario of collecting the reference latency, the latency is specifically a residence time, and in an application to a scenario of transmitting the DetNet-flow data packet, the latency is an actual transmission latency. The operation may include: obtaining, from the temp time info field, the packet reception time point (denoted as Time1) that the ingress node in the present DetNet domain receives the packet, for example, the DetNet-flow data packet or the reference latency measurement packet, and determining the packet reception time point (denoted as Time2) that the present node receives the packet, for example, the DetNet-flow data packet or the reference latency measurement packet, and then determining a latency of the packet in the current DetNet domain as Time2-Time1. If the Cmd field is set to an instruction value a2, for example, 2, the operation is usually performed by an egress node (such as GwIdn shown in FIG. 6) in the last DetNet domain.

When the Cmd field is set to an instruction value a3, for example, 3, it may indicate the following two operations. One of the operations is to store the latency of the packet, for example, the DetNet-flow data packet or the reference latency measurement packet in the previous DetNet domain into the residence time list in the information item corresponding to the ingress node in the previous DetNet domain; where, in an application to a scenario of collecting the reference latency, the latency is specifically a residence time; in an application to a scenario of transmitting the DetNet-flow data packet, the latency is an actual transmission latency. The specific operation may include: obtaining, from the temp time info field, the packet reception time point (denoted as Time1) that the ingress node (e.g. I-Gw) in the previous DetNet domain receives the packet, for example, the DetNet-flow data packet or the reference latency measurement packet; obtaining, from a specified position, a packet sending time point (denoted as Time2) that an egress node in the previous DetNet domain sends the packet, for example, the DetNet-flow data packet or the reference latency measurement packet; calculating a latency of the packet, for example, the DetNet-flow data packet or the reference latency measurement packet in the previous DetNet domain as Time2-Time1; recording the calculated latency of the previous DetNet domain into the residence time list in the information item corresponding to the previous DetNet domain. The other operation is to record the packet reception time point that the present node receives the packet, for example, the DetNet-flow data packet or the reference latency measurement packet into the temp time info field. If the Cmd field is set to an instruction value a3, for example, 3, the operations are usually performed by an ingress node in other DetNet domains other than the first DetNet domain.

8) Rate field, which may occupy 11 bits. In this embodiment, the packet, for example, the DetNet-flow data packet or the reference latency measurement packet, may carry a respective Rate field corresponding to each DetNet domain that the packet passes through, where the respective rate field corresponding to each DetNet domain is used to carry the Rate of the corresponding DetNet domain. The rate of each DetNet domain may be obtained by converting the measured timing ratio of the DetNet domain to the last DetNet domain that the packet passes through (e.g. $k_1$ and $k_2$ mentioned above), which will be detailed below. No redundant descriptions are made herein. The highest bit of the Rate represents positive or negative offset: when the highest bit is a first value, for example, 0, it indicates a positive offset; when the highest bit is a second value, for example, 1, it indicates a negative offset. In applications, the offset per millisecond is 1023ns (about 1us) at most. It should be noted that if the value of the Rate itself is 0, it indicates no frequency offset compensation is required.

9) Latency field (residence time list), as an embodiment, the residence time list may occupy 32 bits. In an application to a scenario of collecting the reference latency, the residence time list can carry a residence time of the reference latency measurement packet in the DetNet domain, with the details referred to the following embodiments of collecting the reference latency. In an application to a scenario of transmitting the DetNet-flow data packet, the residence time list can carry an actual transmission latency of the DetNet-flow data packet in the DetNet domain, with the details referred to the following embodiments of transmitting the DetNet-flow data packet.

Based on the above DCTIList information, descriptions on collecting the reference latency of the each DetNet domain are made below.

With FIG. 6 as an example, a reference latency measurement packet is firstly constructed at the ingress node in the first DetNet domain, i.e. at I-Gw1 in the DetNet domain 1.

The reference latency measurement packet may carry the DCTIList information. The DCTIList information has a structure shown in FIG. 7. In this embodiment, the DCTIList information field at least includes a Flag field, a Pointer, a Compensation cap field, a temp time info field, a respective information item corresponding to the ingress node in each DetNet domain that the reference latency measurement packet passes through, and an information item corresponding to the egress node in the last DetNet domain.

In this embodiment, the Flag field is set to a value4, for example, 3, to indicate collecting the reference latency. The Compensation cap field may be null or a pre-measured Compensation cap value.

In this embodiment, each of the information items at least includes: a node identifier field, a Cmd field, a Rate field and a residence time list.

Wherein the Cmd field in the information item corresponding to the ingress node in the first DetNet domain, i.e. I-Gw1 in the DetNet domain 1, is set to an instruction value a1, for example, 1. In the information item corresponding to the ingress node in any DetNet domain other than the ingress node in the first DetNet domain, the Cmd field is set to an instruction value a3, for example, 3. In the information item corresponding to the egress node, i.e. E-Gwn, in the last DetNet domain, the Cmd field is set to an instruction value a2, for example, 2.

As an embodiment, the Rate field and the residence time list in each information item may be null or a preset value. FIG. 8 illustrates the DCTIList information field carried by the reference latency measurement packet at the ingress node I-Gw1 in the first DetNet domain.

I-Gw1, as the ingress node in the first DetNet domain, i.e. the DetNet domain 1, based on the Cmd field being set to the instruction value a1, for example, 1, records the time point at which the reference latency measurement packet is successfully constructed into the temp time info field, and points the Pointer to a next information item (i.e. the information item corresponding to the ingress node in the next DetNet domain).

I-Gw1 sends the reference latency measurement packet in the DetNet domain 1.

E-Gw1 in the DetNet domain 1 receives the reference latency measurement packet.

When the E-Gw1 in the DetNet domain 1 sends the reference latency measurement packet, it may mark a packet sending time point of sending the reference latency measurement packet at a specified position of the reference latency measurement packet and then send the reference latency measurement packet.

I-Gw2 in the DetNet domain 2 receives the reference latency measurement packet and identifies the information item corresponding to the I-Gw2 from the reference latency measurement packet. If the Cmd field in the information item is set to the instruction value a3, for example, 3, the following two operations are performed.

One of the operations is to determine a residence time of the reference latency measurement packet in a previous DetNet domain, i.e. the DetNet domain 1, and store the residence time into the residence time list in the information item corresponding to the previous DetNet domain (i.e. the information item indicated by GwId0). The operation may include: obtaining the packet reception time point (referring to the time point of constructing the reference latency measurement packet) of the ingress node, i.e. I-Gw1, of the previous DetNet domain, i.e. the DetNet domain 1, from the temp time info field of the reference latency measurement packet, the packet reception time point being Time1; picking out the packet sending time point Time_2 of the egress node, i.e. E-Gw1, in the previous DetNet domain, i.e. the DetNet domain 1, from the specified position of the reference latency measurement packet; calculating a residence time of the reference latency measurement packet in the previous DetNet domain, i.e. the DetNet domain 1 as Time2-Time1; recording the residence time Time2-Time1 into the Residence time list in the information item corresponding to the previous DetNet domain, i.e. the DetNet domain 1 (i.e. information item indicated by GwId0); afterwards, pointing the Pointer to the next information item (i.e. the information item corresponding to the ingress node in the next DetNet domain).

The other operation is that the present I-GW2 records the packet reception time point of receiving the reference latency measurement packet into the temp time info field.

I-Gw2 in the DetNet domain 2 sends the reference latency measurement packet in the DetNet domain 2.

E-Gw2 in the DetNet domain 2 receives the reference latency measurement packet.

When the E-Gw2 in the DetNet domain 2 sends the reference latency measurement packet, the E-Gw2 may mark the packet sending time point of sending the reference latency measurement packet on a specified position of the reference latency measurement packet and then continue to send the reference latency measurement packet.

I-Gw3 in the DetNet domain 3 receives the reference latency measurement packet, which performs operations similar to those performed by I-Gw2 and thus no redundant descriptions are made herein.

E-Gw3 in the DetNet domain 3 receives the reference latency measurement packet, which performs operations similar to those performed by E-Gw2.

And so on until the egress node E-Gwn in the last DetNet domain receives the reference latency measurement packet.

After receiving the reference latency measurement packet, the E-Gwn identifies the information item corresponding to the present E-Gwn from the reference latency measurement packet. If it is found that the Cmd field in the information item is set to the instruction value a2, for example, 2, the following operation is performed: obtaining the packet reception time point (denoted as t'Ingress) that the ingress node i.e. I-Gwn, in the present DetNet domain receives the reference latency measurement packet from the temp time info field of the reference latency measurement packet, and calculating a residence time tres of the reference latency measurement packet in the present DetNet domain, i.e. the last DetNet domain.

As an embodiment, the tres is calculated by the following formula: tres = t'Ready-t'Ingress, where t'Ready represents a time point that the present E-Gwn completes processing on the reference latency measurement packet based on a set measurement packet processing manner such as calculation and various processing operations. As an embodiment, t'Ready may be expressed by the following formula: t'Ready =t'Received+$\Delta$t', where t'Received is the packet reception time point that the present E-Gwn receives the reference latency measurement packet, and $\Delta$t' represents a latency caused by the present E-Gwn processing the reference latency measurement packet. The $\Delta$t' includes a time required for completing the processing on the reference latency measurement packet based on the set measurement packet processing manner, such as calculation and various processing operations. Specifically, the $\Delta$t' is a time difference between the packet reception time point t'Received of receiving the reference latency measurement packet and the time point t'Ready of completing processing and preparing to send the reference latency measurement packet. In a specific implementation, the $\Delta$t' may be set based on actual requirements.

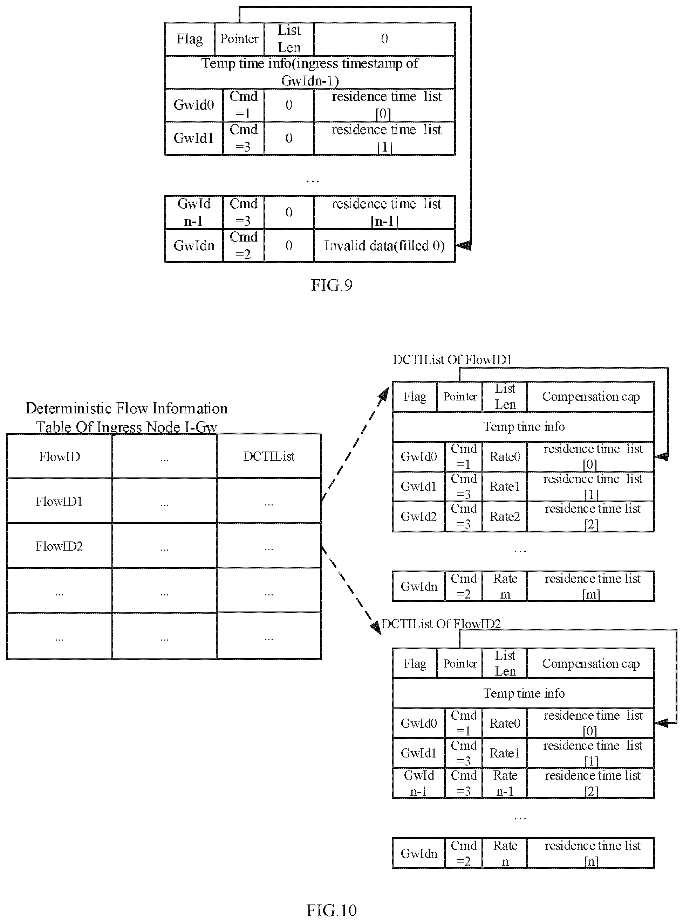

The E-Gwn records the tres into the residence time list in the information item corresponding to the I-Gwn (i.e. information item indicated by GwIdn-1) as shown in FIG. 9. It should be noted that the residence time list in the information item corresponding to the E-Gwn (i.e. information item indicated by GwIdn) shown in FIG. 9 may be null or a specified value, which is not used for subsequently determining the reference latency.

Next, the E-Gwn reports the residence time in each residence time list in the reference latency measurement packet to a control plane such that the control plane, based on the transmission path of the reference latency measurement packet, evaluates and adjusts the residence time in each residence time list to determine the reference latency of each DetNet domain, i.e. the above $\Delta t_1$, $\Delta t_2$, ... $\Delta t_n$.

The control plane, based on the reference latency of each DetNet domain, and the above global reference latency formula 1 or 2, calculates a target global reference latency S_tref of the transmission path of the reference latency measurement packet. For example, as mentioned above, if the transmission path of the reference latency measurement packet and other k-1 paths are mutually equivalent paths, the target global reference latency S_tref of the transmission path of the reference latency measurement packet may be determined based on the above global reference latency formula 1 in this embodiment; if the transmission path of the reference latency measurement packet has no equivalent path, the target global reference latency S_tref of the transmission path of the reference latency measurement packet may be determined based on the above global reference latency formula 2 in this embodiment.

In this embodiment, the control plane may further calculate the compensation cap value, i.e., (S_tref -tfix$_i$) in the above latency compensation formula 1 or (S_tref -tfix) in the above latency compensation formula 2.

Based on the above compensation cap, the target global reference latency S_tref, and the reference latency of each DetNet domain and the like, the control plane constructs a DetNet-flow information table as shown in FIG. 10. As shown in FIG. 10, a DetNet-flow information entry corresponding to each DetNet flow includes corresponding DCTIList information. In this embodiment, the control plane may distribute the DetNet-flow information table to the ingress node in the first DetNet domain that the DetNet flow passes through, for example, the above I-GW1.

Next, cross-domain transmission of the DetNet-flow data packet can be performed based on the DetNet-flow information table, which will be described below.

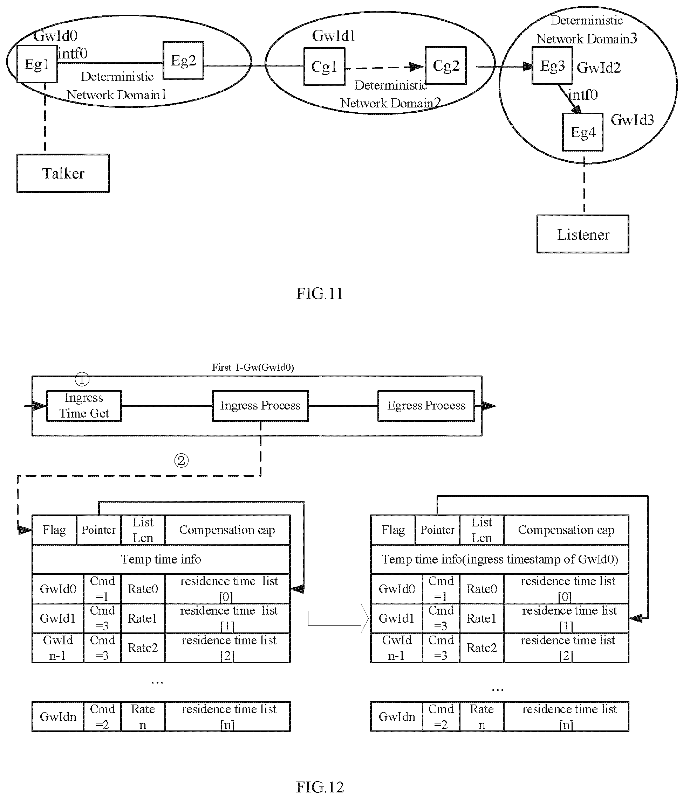

Referring to FIG. 11, FIG. 11 is a schematic diagram illustrating cross-domain transmission according to an embodiment of the present disclosure. With a DetNet-flow data packet between the Talker and the Listener shown in FIG. 11 as an example, the DetNet-flow data packet originated by the Talker may pass through the following three DetNet domains: a DetNet domain 1, a DetNet domain 2 and a DetNet domain 3. Eg1 is an ingress node by which the DetNet-flow data packet enters the DetNet domain 1, and Eg2 is an egress node by which the DetNet-flow data packet leaves the DetNet domain 1; Cg1 is an ingress node by which the DetNet-flow data packet enters the DetNet domain 2, and Cg2 is an egress node by which the DetNet-flow data packet leaves the DetNet domain 2; Eg3 is an ingress node by which the DetNet-flow data packet enters the DetNet domain 3, and Eg4 is an egress node by which the DetNet-flow data packet leaves the DetNet domain 3.

As shown in FIG. 11, when the Eg1 receives a DetNet-flow data packet (denoted as packet 110) sent by the Talker, it records a time point (i.e. packet reception time point, illustrated by Ingress timestamp of GwId0 in FIG. 12) that the present Eg1 receives the packet 110, and based on the DetNet-flow information carried in the packet 110 (e.g. IP 5-tuple+equivalent path number, where the equivalent paths are used to achieve multi-path reliability of PREOF), determines an identifier (FlowID) of the DetNet flow to which the packet 110 belongs, and based on the FlowID, queries the local DetNet-flow information table shown in FIG. 10, and then based on an obtained DetNet-flow information entry, encapsulates the corresponding DCTIList information in the packet 110. In this embodiment, the DCTIList information encapsulated in the packet 110 may correspond to the DCTIList information in the queried DetNet-flow information entry.

In this embodiment, the DCTIList information encapsulated in the packet 110 at least includes a Flag field, a Pointer, a Compensation cap field, a temp time info field, a respective information item corresponding to the ingress node in each DetNet domain that the packet 110 passes through and an information item corresponding to the egress node in the last DetNet domain.

In this embodiment, the Flag field is set to a value3, for example, 2, to indicate the frequency offset cannot be neglected. The Compensation cap field may be a pre-obtained Compensation cap value.

In this embodiment, each information item at least includes: a node identifier field, a Cmd field, a Rate field, a residence time list. Wherein, in the information item corresponding to the ingress node in the first DetNet domain, i.e. Eg1 in the DetNet domain 1, the Cmd field is set to an instruction value a1, for example, 1, and the Rate field carries the Rate of the present DetNet domain. In the information item corresponding to the ingress node of any DetNet domain other than the ingress node in the first DetNet domain, for example, Cg1 in the DetNet domain 2, and Eg3 in the DetNet domain 3, the Cmd field is set to an instruction value a3, for example, 3, and the Rate field carries the Rate of the present DetNet domain, for example, 1. In the information item corresponding to the egress node of the last DetNet domain, i.e. Eg4 in the DetNet domain 3, the Cmd field is set to an instruction value a2, for example, 2, and the Rate field carries the Rate of the present DetNet domain, for example, 1. As an embodiment, the residence time list in the information item corresponding to the ingress node or egress node in each DetNet domain may be null or the reference latency of the DetNet domain.

It is to be noted that, as another embodiment, the above DCTIList information may also be carried in the packet 110 before reaching Eg1. For example, the Talker carries the above DCTIList information in the packet 110 to be sent, or a device between the Talker and Eg1 carries the above DCTIList information upon receiving the packet 110, and so on, which is not limited herein.

As shown in FIG. 11, based on the Cmd field in the information item corresponding to the Eg1 being set to the instruction value a1, for example, 1, the Eg1 records the packet reception time point Ingress timestamp of GwId0 of receiving the packet 110 into the above temp time info field, and point the above Pointer to the information item (information item where GwId1 is located) corresponding to the ingress node in the next DetNet domain, i.e. the DetNet domain 2, as shown in FIG. 12. For ease of descriptions, the packet 110 encapsulated with the DCTIList information may be denoted as packet 111.

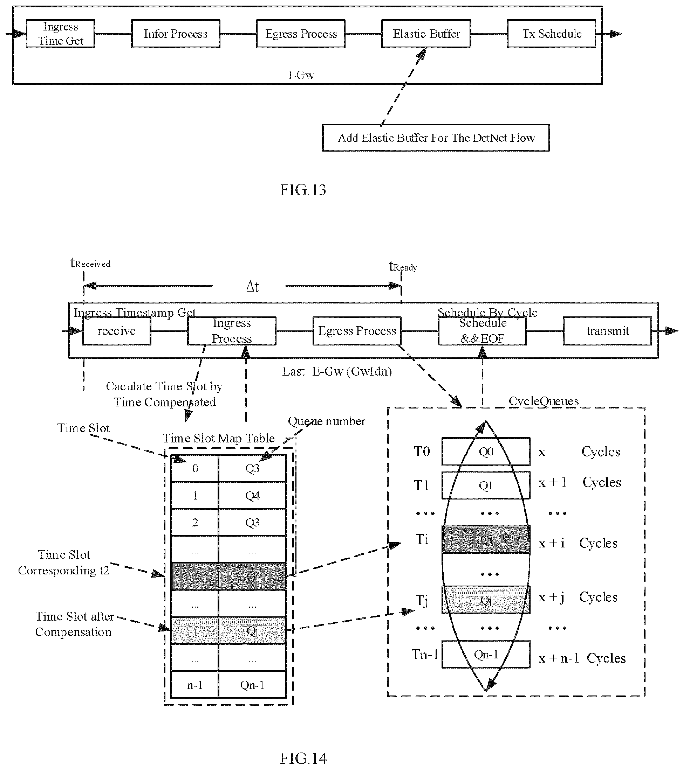

Eg1 firstly stores the packet 111 into an elastic buffer as shown in FIG. 13. Here, the purpose of introducing the elastic buffer is to eliminate excess demand of burst DetNet-flow data packets for resources.

Based on the First In, First Out method, Eg1 distributes the packets in the Elastic Buffer to a corresponding scheduling queue of each scheduling cycle.

When the scheduling cycle arrives, the Eg1 schedules the packets in the scheduling queue corresponding to the scheduling cycle for transmission in the DetNet domain 1.

With scheduling the packet 111 to be transmitted in the DetNet domain 1 as an example, after receiving the packet 111, the Eg2 stores the packet into a scheduling queue of the corresponding scheduling cycle, and when the corresponding scheduling cycle arrives, schedules the packet 111 in the scheduling queue corresponding to the scheduling cycle to continue transmission. When transmitting the packet 111, the Eg2 may mark a time point of sending the packet (i.e. packet sending time point) at a specified position of the packet 111.

The Cg1 receives the packet 111 and identifies the information item corresponding to the present Cg1 from the packet 111; when it is found that the Cmd field in the information item is set to an instruction value a3, for example, 3, the following two operations are performed.

One of the operations is to determine the actual transmission latency of the previous DetNet domain, i.e. the DetNet domain 1, which the packet 111 passes through, for example, the above $\Delta t'_1$, and store it into the residence time list in the information item corresponding to the previous domain (i.e. information item indicated by GwId0). The operation may include: obtaining the packet reception time point (set as Time1) of the ingress node, i.e. the Eg1, in the previous DetNet domain, i.e. the DetNet domain 1, from the temp time info field of the packet 111; picking out a packet sending time point (set as Time2) of the egress node, i.e. the Eg2, in the previous DetNet domain, i.e. the DetNet domain 1, from a packet specified position of the packet 111; determining the actual transmission latency of the packet 111 passing through the previous DetNet domain, i.e. the DetNet domain 1 as Time2-Time1; recording the actual transmission latency Time2-Time1 into the residence time list in the corresponding information item (i.e. the information item indicated by GwId0) in the previous DetNet domain, i.e. the DetNet domain 1, and at the same time, pointing the Pointer in the DCTIList information field to the information item (the information item indicated by GwId2) corresponding to a next DetNet domain, i.e. the DetNet domain 3.

The other operation is that the present Cg1 records the time point of receiving the packet 111 (denoted as packet reception time point) into the temp time info field.

Next, the Cg1 firstly stores the packet 111 into the Elastic Buffer shown in FIG. 13 and then schedules the packets in the Elastic Buffer based on the First In, First Out method, so as to store them into a scheduling queue corresponding to each scheduling cycle. When the scheduling cycle arrives, the Cg1 schedules the packets in the scheduling queue corresponding to the scheduling cycle to be transmitted in the DetNet domain 2.

With scheduling the packet 111 to be transmitted in the DetNet domain 2 as an example, after receiving the packet 111, the Cg2 stores the packet into the scheduling queue of the corresponding scheduling cycle. And when the corresponding scheduling cycle arrives, the Cg2 schedules the packet 111 in the scheduling queue corresponding to the scheduling cycle. When sending the packet 111, the Cg2 may mark a time point of sending the packet 111 (i.e. packet sending time point) at a specified position of the packet 111.

The Eg3 receives the packet 111 and identifies the information item corresponding to the present Eg3 from the packet 111; when it is found that the Cmd field in the information item is set to an instruction value a3, for example, 3, the following two operations are performed.

One of the operations is to determine the actual transmission latency of the packet 111 passing through the previous DetNet domain, i.e. the DetNet domain 2, for example, the above $\Delta t'_2$, and store it into the residence time list in the information item corresponding to the previous DetNet domain (i.e. the information item indicated by GwId1). The operation may include: obtaining the packet reception time point (set as Time1) of the ingress node in the previous DetNet domain, i.e. Cg1 in the DetNet domain 2 from the temp time info field of the packet 111; picking out a packet sending time point (denoted as Time2) of the egress node, i.e. the Cg2, in the previous DetNet domain, i.e. the DetNet domain 2, from a specified position of the packet 111; determining the actual transmission latency of the packet 111 passing through the previous DetNet domain, i.e. the DetNet domain 2, as Time2-Time1; recording the actual transmission latency Time2-Time1 into the information item (the information item indicated by GwId1) corresponding to the ingress node in the previous DetNet domain, i.e. Cg1 in the DetNet domain 2.

The other operation is that the present Eg3 records the time point of receiving the packet 111 (i.e. packet reception time point) into the temp time info field.

Next, the Eg3 firstly stores the packet 111 into the Elastic Buffer shown in FIG. 13 and then schedules the packets in the Elastic Buffer based on the First In, First Out method, so as to store them into a scheduling queue corresponding to each scheduling cycle. When the scheduling cycle arrives, the Eg3 schedules the packets in the scheduling queue corresponding to the scheduling cycle to be transmitted in the DetNet domain 3.

With transmitting the packet 111 in the DetNet domain 3 as an example, after receiving the packet 111, the Eg4 records the time point of receiving the packet 111 (i.e. packet reception time point, denoted as tReceived). In a specific implementation, a hardware controller in the Eg4, after receiving the packet 111, marks the time point of receiving the packet 111 (i.e. packet reception time point, denoted as tReceived) onto a specified position in the header of the packet 111.

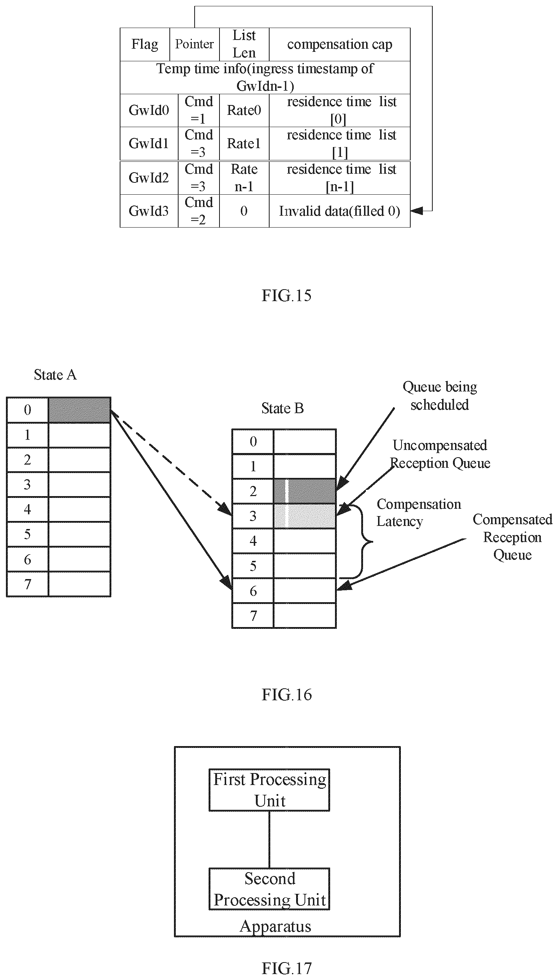

Eg4 identifies the information item corresponding to the present node from the packet 111. When it is found that the Cmd field in the information item is set to an instruction value a2, for example, 2, the actual transmission latency of the current DetNet domain is determined, which specifically includes: picking out the packet reception time point (set as tIngress) that the ingress node, i.e. the Eg3, in the present DetNet domain 3 receives the packet 111 from the temp time info field in the packet 111. Based on the processing latency $\Delta t$ in the Eg4, tReady is determined: tReady=tReceived+$\Delta t$. In this embodiment, $\Delta t$ is a preset value, which is obtained based on measurement and comprehensive evaluation, and at least includes the latencies of calculation and various processing (The $\Delta t$ value can be a design or engineering choice): $\Delta t$ =tReady-tReceived. FIG. 14 illustrates tReady and $\Delta t$. The transmission latency of the packet 111 in the present DetNet domain 3 is calculated: $\Delta t'_3$= tReady - tIngress. FIG. 15 illustrates the packet 111.

Eg4 picks out the actual transmission latency carried in each residence time list in the information items corresponding to other DetNet domains carried in the packet 111, i.e. $\Delta t'_1$ and $\Delta t'_2$ in the above latency compensation formulas, and at the same time, picks out Rates, i.e. Rate1 and Rate 2 in each information item. For example, Rate1 represents the number of nanoseconds to-be-compensated per millisecond for the first DetNet domain, i.e. the DetNet domain 1 relative to the last DetNet domain, i.e. the DetNet domain 3, which is obtained by converting the above $k_1$, and so on.

The Eg4 picks out the compensation cap value from the compensation cap field carried in the packet 111, i.e. (S_tref -tfix) in the above latency compensation formula. Afterwards, based on the (S_tref -tfix), and the above latencies $\Delta t'_1$, $\Delta t'_2$ and the Rate1 and Rate2, the Eg4 calculates the to-be-compensated time tc according to the following latency compensation formula:

$$tc = (S\_tref - tfix) - (k_1 * \Delta t'_1 + k_2 * \Delta t'_2 + \Delta t'_3).$$

In this embodiment, $k_1 * \Delta t'_1$ is equivalent to Rate1*(1+$\Delta t'_1$/1000); $k_2 * \Delta t'_2$ is equivalent to Rate2*(1+$\Delta t'_2$/1000).

Based on tReady + tc, the Eg4 determines a corresponding target scheduling cycle, and places the above packet 111 into a periodic scheduling queue corresponding to the target scheduling cycle. As shown in FIG. 16, if the tReceived time point corresponds to the scheduling cycle 0 in FIG. 16 and the tReady time point corresponds to the scheduling cycle 2 in FIG. 16, after the above latency tc (e.g. corresponding to three time slots) is compensated, the packet 111 enters the periodic scheduling queue corresponding to the scheduling cycle 6. Next, when the periodic scheduling reaches the scheduling cycle 6, the packet 111 may be scheduled. Finally, time compensation is performed for the packet 111 at the egress node in the last DetNet domain. Such time compensation at the egress node in the last DetNet domain can ensure the final compensation latency is bounded, thereby reducing a jitter range.

The above descriptions are made to cross-domain transmission of the DetNet-flow data packet.

It can be seen from the above descriptions that, in this embodiment, it is not required to synchronize clocks between multiple DetNet domains that the DetNet-flow data packet passes through, which facilitates construction of a large-scale deterministic network and greatly reduces deployment difficulty.

Above descriptions are made to the method according to the embodiments of the present disclosure, and the following descriptions will be made to an apparatus according to the embodiments of the present disclosure.

Referring to FIG. 17, FIG. 17 is a structural diagram illustrating an apparatus according to an embodiment of the present disclosure. The apparatus is applied to a network node in a DetNet domain. The apparatus includes:

a first processing unit, configured to, if the network node is an egress node in a last DetNet domain that a DetNet-flow data packet passes through, determine an actual transmission latency $\Delta t'_n$ of the received DetNet-flow data packet in the last DetNet domain; based on the $\Delta t'_n$ and actual transmission latencies of the DetNet-flow data packet when passing through other DetNet domains, determine a to-be-compensated time tc;
a second processing unit, configured to, based on the tc and a tReady, determine a corresponding target scheduling cycle, and place the DetNet-flow data packet into a periodic scheduling queue corresponding to the target scheduling cycle for scheduling and transmission; where the tReady refers to a time point that the present node completes processing on the DetNet-flow data packet based on a set data packet processing manner.

As an embodiment, the first processing unit is configured to, if the network node is an ingress node in a first DetNet domain that the DetNet-flow data packet passes through, further obtain a packet reception time point that the present node receives the DetNet-flow data packet;
the second processing unit is further configured to schedule and transmit the DetNet-flow data packet in the first DetNet domain, where the DetNet-flow data packet carries a time information Temp time info field. The packet reception time point that the present node receives the DetNet-flow data packet is carried in the Temp time info field.

As an embodiment, the first processing unit is configured to, if the network node is an ingress node in any DetNet domain other than a first DetNet domain that the DetNet-flow data packet passes through, further determine an actual transmission latency of the DetNet-flow data packet when passing through a previous DetNet domain, and record the determined actual transmission latency into an information item which is carried in the DetNet-flow data packet and corresponds to the previous DetNet domain;
the second processing unit is configured to further record a reception time point that the network node receives the DetNet-flow data packet into the Temp time info field carried in the DetNet-flow data packet and send the DetNet-flow data packet.

As an embodiment, determining the actual transmission latency of the DetNet-flow data packet when passing through the previous DetNet domain includes: obtaining Time1 from the Temp time info field, where the Time1 represents the packet reception time point that the ingress node in the previous DetNet domain receives the DetNet-flow data packet; obtaining Time2 from a specified position of the DetNet-flow data packet, where the Time2 represents a packet sending time point that an egress node in the previous DetNet domain sends the DetNet-flow data packet; calculating a difference between the Time2 and the Time1, and based on the difference between the Time2 and the Time1, determining an actual transmission latency of the DetNet-flow data packet when passing through the previous DetNet domain.

As an embodiment, determining the actual transmission latency $\Delta t'_n$ of the received DetNet-flow data packet in the last DetNet domain includes: from the Temp time info field, obtaining a packet reception time point tIngress that an ingress node in the last DetNet domain receives the DetNet-flow data packet; calculating an actual transmission latency $\Delta t'_n$ of the DetNet-flow data packet in the last DetNet domain, where $\Delta t'_n$ = tReady - tIngress.

As an embodiment, the tReady is expressed by the following formula: tReady = tReceived + $\Delta t$;
where tReceived represents a reception time point that the present node receives the DetNet-flow data packet, and $\Delta t$ represents a processing latency preset by the present node.

As an embodiment, based on the $\Delta t'_n$ and the actual transmission latencies of the DetNet-flow data packet when passing through other DetNet domains, determining the to-be-compensated time tc includes: based on the $\Delta t'_n$, the actual transmission latencies of the DetNet-flow data packet when passing through other DetNet domains, Rate$_i$ and a compensation cap value, calculating the to-be-compensated time tc. Where the DetNet-flow data packet carries the actual transmission latencies of the DetNet-flow data packet when passing through other DetNet domains; the Rate$_i$ represents the number of nanoseconds to be compensated per millisecond for an i-th DetNet domain relative to a target network domain, and the target network domain is the last DetNet domain; the DetNet-flow data packet carries the Rates of other DetNet domains relative to the target network domain and the DetNet-flow data packet carries the compensation cap value.

As an embodiment, the based on the $\Delta t'_n$, the actual transmission latencies of the DetNet-flow data packet when passing through other DetNet domains, the Rate$_i$ and the compensation cap value, calculating the to-be-compensated time tc includes: calculating the tc based on the following formula:

$$tc = (S\_tref-tfix) - (k_1 * \Delta t'_1 + k_2 * \Delta t'_2 + \ldots + k_{n-1} * \Delta t'_{n-1} + \Delta t'_n);$$

where (S_tref-tfix) represents the compensation cap value, $k_i * \Delta t'_i = Rate_i * (1 + \Delta t'_i / 1000)$, and $\Delta t'_i$ represents the actual transmission latency of the DetNet-flow data packet when passing through the i-th DetNet domain.

As an embodiment, the S_tref represents a target global reference latency of the transmission path of the DetNet-flow data packet;

if the transmission path and other k-1 paths are mutually equivalent paths and the target global reference latency of each of the equivalent path is the same, the S_tref is represented by the following formula: $S\_tref = MAX(tref_1, tref_2 \ldots tref_k)$, where $tref_i$ represents a collected candidate global reference latency of the path i in the equivalent paths, $tref_i = tfix_i + k_{1i} * \Delta t_{1i} + k_{2i} * \Delta t_{2i} + \ldots + k_{n-1i} * \Delta t_{n-1i} + \Delta t_{ni}$; $tfix_i$ represents an inter-domain transmission latency of the path i, which is a preset value; $\Delta t_{ni}$ represents a reference latency of the n-th DetNet domain in the path i; $k_{n-1i}$ represents a timing ratio of the (n-1)-th DetNet domain to the last DetNet domain in the path i;

if the transmission path has no equivalent path, determining the target global reference latency of the transmission path as a candidate global reference latency of the transmission path.

As an embodiment, the first processing unit is configured to, in the process of collecting candidate global reference latency of the transmission path, if the network node is an ingress node of the first DetNet domain in the transmission path, construct a reference latency measurement packet; the second processing unit is configured to further send the reference latency measurement packet in the first DetNet domain; where the reference latency measurement packet at least carries the Temp time info field carrying a time point that the present node receives the reference latency measurement packet, and the time point is a time point that the reference latency measurement packet is successfully constructed;

if the network node is an ingress node in any DetNet domain other than the first DetNet domain in the transmission path, the first processing unit is configured to, after receiving the reference latency measurement packet, further obtain a time point Time_1 that the ingress node in the previous DetNet domain receives the reference latency measurement packet, from the Temp time info field of the reference latency measurement packet and pick out a time point Time_2 that the egress node in the previous DetNet domain sends the reference latency measurement packet from a specified position of the reference latency measurement packet, and record a difference between the Time_2 and the Time_1 as a residence time of the previous DetNet domain into a Residence time list which is carried in the reference latency measurement packet and corresponds to the ingress node in the previous DetNet domain; and record the time point that the present node receives the reference latency measurement packet into the Temp time info field; and the second processing unit is configured to further transmit the reference latency measurement packet along the transmission path;

if the network node is an egress node in the last DetNet domain in the transmission path, the first processing unit is further configured to obtain a time point t'Ingress that the ingress node in the present DetNet domain receives the reference latency measurement packet from the Temp time info field of the reference latency measurement packet, and calculate a residence time tres of the reference latency measurement packet in the present DetNet domain based on tres= t'Ready- t'Ingress, where t'Ready refers to a sum of a time point t'Received that the present node receives the reference latency measurement packet and a processing latency $\Delta t'$ of the present node; the second processing unit is configured to further report the tres and the residence time in each Residence time list carried by the reference latency measurement packet to a control plane such that the control plane, based on the tres and the residence time in each Residence time list, determines the reference latency of each DetNet domain in the transmission path, and based on the reference latency of each DetNet domain in the transmission path, determines a candidate global reference latency of the transmission path.

As an embodiment, the candidate global reference latency of the transmission path is expressed by the following formula:

$$tref = tfix + (k_1 * \Delta t_1 + k_2 * \Delta t_2 + \ldots + k_{n-1} * \Delta t_{n-1} + \Delta t_n);$$

where tfix represents an inter-domain latency between the DetNet domains in the transmission path, which is obtained by

measurement in advance; $\Delta t_n$ represents a reference latency of the n-th DetNet domain in the transmission path, and $k_{n-1}$ represents a timing ratio of the (n-1)-th DetNet domain to the last DetNet domain in the transmission path.

As an embodiment, the timing ratio $k_i$ of the i-th DetNet domain to the last DetNet domain in any path is determined in the following blocks: determining a timing ratio of a specified reference clock source to a clock source of the i-th DetNet domain as $k_i'$; determining a timing ratio of the specified reference clock source to a clock source of the last DetNet domain as $k_n'$; calculating $k_i$ according to the following formula: $k_i=k_i'/k_n'$.

Till now, descriptions on the apparatus shown in FIG. 17 are completed.

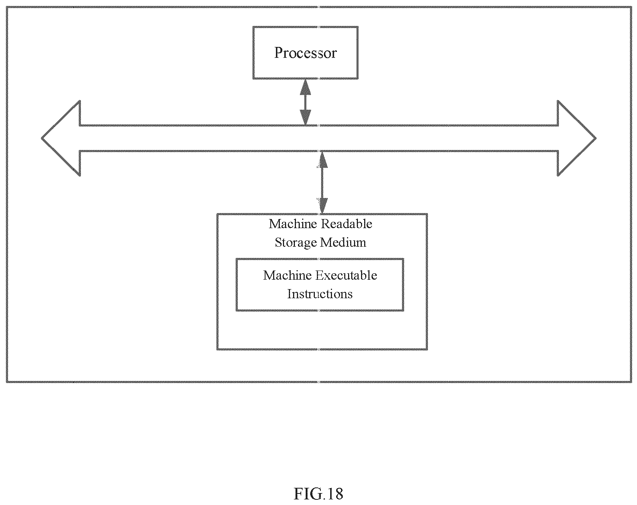

An embodiment of the present disclosure also provides a hardware structure of the apparatus of FIG. 17. Referring to FIG. 18, FIG. 18 is a structural diagram illustrating an electronic device provided by an embodiment of the present disclosure. As shown in FIG. 18, the hardware structure may include a processor and a machine readable storage medium, where the machine readable storage medium stores machine executable instructions executable by the processor; and the processor is configured to execute the machine executable instructions to perform the method provided by the above embodiments of the present disclosure.

Based on the same application idea as the above method, an embodiment of the present disclosure further provides a machine readable storage medium, storing several computer instructions, where the computer instructions are executed by a processor to implement the method in the above embodiments of the present disclosure.

Illustratively, the machine readable storage medium mentioned herein may be any of electronic storage devices, magnetic storage devices, optical storage devices or other physical storage devices and may contain or store information such as executable instructions, data and so on. For example, the machine readable storage medium may be a Radom Access Memory (RAM), a volatile memory, a non-volatile memory, a flash memory, a storage drive (e.g. hard disk drive), a solid state disk, any type of storage disk (e.g., compact disk, Digital Video Disk (DVD)), or a similar storage medium, or a combination thereof.

The systems, apparatuses, modules or units described in the above embodiments may be specifically implemented by a computer chip or an entity or may be implemented by a product with a certain function. A typical implementing device may be a computer and the computer may be specifically a personal computer, a laptop computer, a cellular phone, a camera phone, a smart phone, a personal digital assistant, a media player, a navigation device, an email transceiver, a game console, a tablet computer, a wearable device, or a combination of any several devices of the above devices.

For ease of descriptions, the above apparatus is divided into different units based on functionality for descriptions. Of course, the functions of different units may be implemented in a same or a plurality of software and/or hardware when practicing the present disclosure.

The persons skilled in the art should understand that the examples of the present disclosure may be provided as a method, a system, or a computer program product. Thus, entire hardware examples, entire software examples or examples combining software and hardware may be adopted in the present disclosure. Further, the present disclosure may take the form of a computer program product that is implemented on one or more computer available storage media (including but not limited to magnetic disk memory, CD-ROM, and optical memory and so on) including computer available program codes.

The present disclosure is described by referring to flowcharts and/or block diagrams of a method, a device (a system) and a computer program product in the embodiments of the present disclosure. It is understood that each flowchart and/or block in the flowcharts and/or the block diagrams or a combination of a flow chart and/or a block of the flowcharts and/or the block diagrams may be implemented by computer program instructions. These computer program instructions may be provided to a general-purpose computer, a dedicated computer, an embedded processor, or a processor of another programmable data processing device to generate a machine so that the instructions executed by a computer or a processor of another programmable data processing device generate an apparatus for implementing functions designated in one or more flows of the flowcharts and/or one or more blocks of the block diagrams.

Further, these computer program instructions may also be stored in a computer readable memory that can direct a computer or another programmable data processing device to work in a particular manner so that the instructions stored in the computer readable memory generate a product including an instruction apparatus and the instruction apparatus can implement functions designated in one or more flows of the flowcharts and/or one or more blocks of the block diagrams.

The computer program instructions may also be loaded on a computer or another programmable data processing device, so that a series of operation blocks can be executed on the computer or another programmable device to generate processing achieved by the computer, and thus instructions executable on the computer or another programmable device are provided for blocks for realizing functions designated in one or more flows of the flowcharts and/or one or more blocks of the block diagrams.

**Claims**

1. A **cross-domain** transmission method of a deterministic network, DetNet, flow, applied to a network node in a DetNet domain, comprises:

   if the network node is an egress node in a last DetNet domain that a DetNet-flow data packet passes through, determining an actual transmission latency $\Delta t'_n$ of the DetNet-flow data packet in the last DetNet domain;
   based on the $\Delta t'_n$ and actual transmission latencies of the DetNet-flow data packet when passing through other DetNet domains, determining a to-be-compensated time tc, wherein the actual transmission latency of the DetNet-flow data packet in each DetNet domain is determined based on a difference between an entry time point that the DetNet-flow data packet enters the DetNet domain during actual transmission and a leaving time point that the DetNet-flow data packet leaves the DetNet domain during the actual transmission;
   based on the tc and a tReady, determining a corresponding target scheduling cycle, and placing the DetNet-flow data packet into a periodic scheduling queue corresponding to the target scheduling cycle for scheduling and transmission; wherein the tReady refers to a time point that the present node completes processing on the DetNet-flow data packet based on a set data packet processing manner.

2. The method of claim 1, wherein if the network node is an ingress node in a first DetNet domain that the DetNet-flow data packet passes through, the method further comprises:

   recording a packet reception time point that the present node receives the DetNet-flow data packet;
   scheduling and transmitting the DetNet-flow data packet in the first DetNet domain, wherein the DetNet-flow data packet carries a Temp time info field and the recorded packet reception time point that the present node receives the DetNet-flow data packet is carried in the Temp time info field.

3. The method of claim 1 or 2, wherein if the network node is an ingress node in any DetNet domain other than a first DetNet domain that the DetNet-flow data packet passes through, the method further comprises:

   determining an actual transmission latency of the DetNet-flow data packet when passing through a previous DetNet domain, and recording the determined actual transmission latency into an information item which is carried in the DetNet-flow data packet and corresponds to the previous DetNet domain;
   recording a reception time point that the present node receives the DetNet-flow data packet into a Temp time info field carried in the DetNet-flow data packet.

4. The method of claim 3, wherein the determining the actual transmission latency of the DetNet-flow data packet when passing through the previous DetNet domain comprises:

   obtaining Time1 from the Temp time info field, wherein the Time1 represents the packet reception time point that the ingress node in the previous DetNet domain receives the DetNet-flow data packet;
   obtaining Time2 from a specified position of the DetNet-flow data packet, wherein the Time2 represents a packet sending time point that an egress node in the previous DetNet domain sends the DetNet-flow data packet;
   calculating a difference between the Time2 and the Time1, and based on the difference between the Time2 and the Time1, determining an actual transmission latency of the DetNet-flow data packet when passing through the previous DetNet domain.

5. The method of claim 3, wherein the determining the actual transmission latency $\Delta t'_n$ of the received DetNet-flow data packet in the last DetNet domain comprises:

   from the Temp time info field, obtaining a packet reception time point tIngress that an ingress node in the last DetNet domain receives the DetNet-flow data packet;
   calculating an actual transmission latency $\Delta t'_n$ of the DetNet-flow data packet in the last DetNet domain, wherein $\Delta t'_n$ = tReady - tIngress.

6. The method of claim 1 or 5, wherein the tReady is expressed by following formula:

$$tReady = tReceived + \Delta t;$$

wherein tReceived represents a reception time point that the present node receives the DetNet-flow data packet, and $\Delta t$ represents a processing latency preset by the present node.

7. The method of claim 1, wherein, based on the $\Delta t'_n$ and the actual transmission latencies of the DetNet-flow data packet when passing through other DetNet domains, determining the to-be-compensated time tc comprises:

    based on the $\Delta t'_n$, the actual transmission latencies that the DetNet-flow data packet passes through other DetNet domains, $Rate_i$ and a compensation cap value, calculating the to-be-compensated time tc;
    wherein the DetNet-flow data packet carries the actual transmission latencies of the DetNet-flow data packet when passing through other DetNet domains; the $Rate_i$ represents a number of nanoseconds to be compensated per millisecond for an i-th DetNet domain relative to a target network domain, and the target network domain is the last DetNet domain; the DetNet-flow data packet carries the Rates of other DetNet domains relative to the target network domain and the DetNet-flow data packet carries the compensation cap value.

8. The method of claim 7, wherein based on the $\Delta t'_n$, the actual transmission latencies of the DetNet-flow data packet when passing through other DetNet domains, the $Rate_i$ and the compensation cap value, calculating the to-be-compensated time tc comprises:

    calculating the tc based on following formula:

$$tc = (S\_tref - tfix) - (k_1 * \Delta t'_1 + k_2 * \Delta t'_2 + \ldots + k_{n-1} * \Delta t'_{n-1} + \Delta t'_n);$$

    wherein (S_tref-tfix) represents the compensation cap value, $k_i * \Delta t'_i = Rate_i * (1 + \Delta t'_i / 1000)$, and $\Delta t'_i$ represents the actual transmission latency of the DetNet-flow data packet when passing through the i-th DetNet domain.

9. The method of claim 8, wherein the S_tref represents a target global reference latency of a transmission path of the DetNet-flow data packet;
   wherein the S_tref is determined by following blocks:

    if the transmission path and other k-1 paths are mutually equivalent paths and the target global reference latency of each of the equivalent paths is the same, determining the S_tref in following formula: $S\_tref = MAX(tref_1, tref_2 ... tref_k)$, wherein $tref_i$ represents a collected candidate global reference latency of a path i in the equivalent paths, $tref_i = tfix_i + K_{1i} * \Delta_{1i} + k_{2i} * \Delta t_{2i} + \ldots + k_{n-1i} * \Delta t_{n-1i} + \Delta t_{ni}$; $tfix_i$ represents an inter-domain transmission latency of the path i, which is a preset value; $\Delta t_{ni}$ represents a reference latency of a n-th DetNet domain in the path i, $k_{n-1i}$ represents a timing ratio of a (n-1)-th DetNet domain to the last DetNet domain in the path i;
    if the transmission path has no equivalent path, determining the S_tref as a candidate global reference latency of the transmission path.

10. The method of claim 9, further comprises collecting the candidate global reference latency of the transmission path in following blocks:

    **if the network** node is an ingress node of a first DetNet domain in the transmission path, constructing a reference latency measurement packet and sending the reference latency measurement packet in the first DetNet domain; wherein the reference latency measurement packet at least carries a Temp time info field carrying a time point that the present node receives the reference latency measurement packet, and the time point is a time point that the reference latency measurement packet is successfully constructed;
    if the network node is an ingress node in any DetNet domain other than the first DetNet domain in the transmission path, after receiving the reference latency measurement packet, obtaining a time point Time_1 that the ingress node in a previous DetNet domain receives the reference latency measurement packet from the Temp time info field of the reference latency measurement packet and picking out a time point Time_2 that the egress node in the previous DetNet domain sends the reference latency measurement packet from a specified position of the reference latency measurement packet, and recording a difference between the Time_2 and the Time_1 as a residence time of the previous DetNet domain into a latency field Residence time list which is carried in the reference latency measurement packet and corresponds to the ingress node in the previous DetNet domain; and recording the time point that the present node receives the reference latency measurement packet into the Temp time info field, and continuing transmitting the reference latency measurement packet along the transmission path;
    if the network node is an egress node in the last DetNet domain in the transmission path, obtaining a time point t'Ingress that the ingress node in the present DetNet domain receives the reference latency measurement packet from the Temp time info field of the reference latency measurement packet, and calculating a residence time tres of the reference latency measurement packet in the present DetNet domain tres= t'Ready-t'Ingress, where t'Ready refers to a sum of a time point t'Received that the present node receives the reference latency measurement packet and a processing latency $\Delta t'$ of the present node; reporting the tres and the residence time in each Residence time list carried by the reference latency measurement packet to a control plane such that the control plane, based on the tres and the residence time in each Residence time list, determines the reference latency of each DetNet domain in the transmission path, and based on the reference latency of each DetNet domain in the transmission path, determines a candidate global reference latency of the transmission path.

11. The method of claim 10, wherein the candidate global reference latency of the transmission path is expressed in following formula:

$$tref = tfix+(k_1 \cdot \Delta t_1 + k_2 \cdot \Delta t_2 + \ldots + k_{n-1} \cdot \Delta t_{n-1} + \Delta t_n);$$

wherein tfix represents an inter-domain latency between the DetNet domains in the transmission path, which is obtained by measurement in advance; $\Delta t_n$ represents a reference latency of the n-th DetNet domain in the transmission path, and $k_{n-1}$ represents a timing ratio of the (n-1)-th DetNet domain to the last DetNet domain in the transmission path.

12. The method of claim 8, 9 or 11, wherein a timing ratio $k_i$ of the i-th DetNet domain to the last DetNet domain in any path is determined in following blocks:

determining a timing ratio of a specified reference clock source to a clock source of the i-th DetNet domain as $k_i'$; determining a timing ratio of the specified reference clock source to a clock source of the last DetNet domain as $k_n'$; calculating $k_i$ according to following formula: $k_i=k_i'/k_n'$.

13. An electronic device, comprises a processor and a machine readable storage medium; wherein,

the machine readable storage medium stores machine executable instructions executable by the processor; the processor is configured to execute the machine executable instructions to implement a method according to any one of claims 1 to 12.

14. A machine readable storage medium, storing machine executable instructions executable by a processor; wherein, the machine executable instructions are executed by a processor to implement a method of any one of claims 1 to 12.

**Patentansprüche**

1. Domänenübergreifendes Übertragungsverfahren eines deterministischen Netzwerk-, DetNet-, Flusses, angewandt auf einen Netzwerkknoten in einer DetNet-Domäne, das umfasst:

wenn der Netzwerkknoten ein Ausgangsknoten in einer letzten DetNet-Domäne ist, die ein DetNet-Fluss-Datenpaket durchläuft, Bestimmen einer tatsächlichen Übertragungslatenz $\Delta t'_n$ des DetNet-Fluss-Datenpakets in der letzten DetNet-Domäne; basierend auf den $\Delta t'_n$ und tatsächlichen Übertragungslatenzen des DetNet-Fluss-Datenpakets beim Durchlaufen anderer DetNet-Domänen, Bestimmen einer zu kompensierenden Zeit tc, wobei die tatsächliche Übertragungslatenz des DetNet-Fluss-Datenpakets in jeder DetNet-Domäne bestimmt wird, basierend auf einer Differenz zwischen einem Eintrittszeitpunkt, an dem das DetNet-Fluss-Datenpaket während der tatsächlichen Übertragung in die DetNet-Domäne eintritt, und einem Austrittszeitpunkt, an dem das DetNet-Fluss-Datenpaket die DetNet-Domäne während der tatsächlichen Übertragung verlässt; basierend auf dem tc und einem tReady, Bestimmen eines entsprechenden Zielplanungszyklus und Platzieren des DetNet-Fluss-Datenpakets in eine periodische Planungswarteschlange, die dem Zielplanungszyklus für die Planung und Übertragung entspricht; wobei sich tReady auf einen Zeitpunkt bezieht, an dem der gegenwärtige Knoten die Verarbeitung des DetNet-Fluss-Datenpakets basierend auf einer eingestellten Datenpaketverarbeitungsweise abschließt.

2. Verfahren nach Anspruch 1, wobei, wenn der Netzwerkknoten ein Eingangsknoten in einer ersten DetNet-Domäne ist, die das DetNet-Fluss-Datenpaket durchläuft, das Verfahren des Weiteren umfasst:

   Aufzeichnen eines Paketempfangszeitpunkts, zu dem der aktuelle Knoten das DetNet-Fluss-Datenpaket empfängt;
   Planen und Übertragen des DetNet-Fluss-Datenpakets in der ersten DetNet-Domäne, wobei das DetNet-Fluss-Datenpaket ein Temp-Zeitinformationsfeld trägt und der aufgezeichnete Paketempfangszeitpunkt, zu dem der gegenwärtige Knoten das DetNet-Fluss-Datenpaket empfängt, im Temp-Zeitinformationsfeld enthalten ist.

3. Verfahren nach Anspruch 1 oder 2, wobei, wenn der Netzwerkknoten ein Eingangsknoten in einer anderen DetNet-Domäne als einer ersten DetNet-Domäne ist, die das DetNet-Fluss-Datenpaket durchläuft, das Verfahren des Weiteren umfasst:

   Bestimmen einer tatsächlichen Übertragungslatenz des DetNet-Fluss-Datenpakets, wenn es eine vorherige DetNet-Domäne durchläuft, und Aufzeichnen der bestimmten tatsächlichen Übertragungslatenz in einem Informationselement, das in dem DetNet-Fluss-Datenpaket getragen wird und der vorherigen DetNet-Domäne entspricht;
   Aufzeichnen eines Empfangszeitpunkts, zu dem der gegenwärtige Knoten das DetNet-Fluss-Datenpaket empfängt, in einem Temp-Zeitinformationsfeld, das in dem DetNet-Fluss-Datenpaket enthalten ist.

4. Verfahren nach Anspruch 3, wobei das Bestimmen der tatsächlichen Übertragungslatenz des DetNet-Fluss-Datenpakets beim Durchlaufen der vorherigen DetNet-Domäne Folgendes umfasst:

   Erhalten von Time1 aus dem Temp-Zeitinformationsfeld, wobei Time1 den Paketempfangszeitpunkt darstellt, zu dem der Eingangsknoten in der vorherigen DetNet-Domäne das DetNet-Fluss-Datenpaket empfängt;
   Erhalten von Time2 von einer spezifizierten Position des DetNet-Fluss-Datenpakets, wobei Time2 einen Paketsendezeitpunkt darstellt, zu dem ein Ausgangsknoten in der vorherigen DetNet-Domäne das DetNet-Fluss-Datenpaket sendet;
   Berechnen einer Differenz zwischen Time2 und Time1, und basierend auf der Differenz zwischen Time2 und Time1, Bestimmen einer tatsächlichen Übertragungslatenz des DetNet-Fluss-Datenpakets beim Durchlaufen der vorherigen DetNet-Domäne.

5. Verfahren nach Anspruch 3, wobei das Bestimmen der tatsächlichen Übertragungslatenz $\Delta t'_n$ des empfangenen DetNet-Fluss-Datenpakets in der letzten DetNet-Domäne umfasst:

   aus dem Temp-Zeitinformationsfeld, Erhalten eines Paket-Empfangszeitpunkts tIngress, an dem ein Eingangsknoten in der letzten DetNet-Domäne das DetNet-Fluss-Datenpaket empfängt;
   Berechnen einer tatsächlichen Übertragungslatenz $\Delta t'_n$ des DetNet-Fluss-Datenpakets in der letzten DetNet-Domäne, wobei $\Delta t'_n$ = tReady - tIngress.

6. Verfahren nach Anspruch 1 oder 5, wobei tReady durch die folgende Formel ausgedrückt wird:

$$tReady = tReceived + \Delta t;$$

   wobei tReceived einen Empfangszeitpunkt darstellt, zu dem der gegenwärtige Knoten das DetNet-Fluss-Datenpaket empfängt, und $\Delta t$ eine von dem gegenwärtigen Knoten voreingestellte Verarbeitungslatenz darstellt.

7. Verfahren nach Anspruch 1, wobei basierend auf dem $\Delta t'_n$ und den tatsächlichen Übertragungslatenzen des DetNet-Fluss-Datenpakets beim Durchlaufen anderer DetNet-Domänen das Bestimmen der zu kompensierenden Zeit tc umfasst:

   basierend auf dem $\Delta t'_n$, den tatsächlichen Übertragungslatenzen, die das DetNet-Fluss-Datenpaket durch andere DetNet-Domänen durchläuft, $Rate_i$ und einem Kompensationsobergrenzenwert, Berechnen der zu kompensierenden Zeit tc;
   wobei das DetNet-Fluss-Datenpaket die tatsächlichen Übertragungslatenzen des DetNet-Fluss-Datenpakets trägt, wenn es andere DetNet-Domänen durchläuft; die $Rate_i$ eine Anzahl von Nanosekunden darstellt, die pro Millisekunde für eine i-te DetNet-Domäne relativ zu einer Zielnetzwerkdomäne zu kompensieren sind, und die Zielnetzwerkdomäne die letzte DetNet-Domäne ist; das DetNet-Fluss-Datenpaket die Raten anderer DetNet-Domänen relativ zu der Zielnetzdomäne trägt und das DetNet-Fluss-Datenpaket den Kompensationsobergrenzenwert trägt.

8. Verfahren nach Anspruch 7, wobei basierend auf dem $\Delta t'_n$, den tatsächlichen Übertragungslatenzen des DetNet-Flow-Datenpakets beim Durchlaufen anderer DetNet-Domänen, der $\text{Rate}_i$ und dem Kompensationsobergrenzenwert das Berechnen der zu kompensierenden Zeit tc umfasst:

Berechnen des tc basiert auf der folgenden Formel:

$$tc = (S\_tref-tfix) - (k_1 * \Delta t'_1 + k_2 * \Delta t'_2 + ... + k_{n-1} * \Delta t'_{n-1} + \Delta t'_n);$$

wobei $(S\_tref-tfix)$ den Kompensationsobergrenzenwert darstellt, $k_i * \Delta t'_i = \text{Rate}_i * (1 + \Delta t'_i / 1000)$, und $\Delta t'_i$ für die tatsächliche Übertragungslatenz des DetNet-Flow-Datenpakets beim Durchlaufen der i-ten DetNet-Domäne steht.

9. Verfahren nach Anspruch 8, wobei S_tref eine Ziel-Globalreferenzlatenz eines Übertragungspfades des DetNet-Fluss-Datenpakets darstellt;
wobei S_tref durch die folgenden Blöcke bestimmt wird:

wenn der Übertragungspfad und andere k-1 Pfade gegenseitig äquivalente Pfade sind und die Ziel-Globalreferenzlatenz jedes der äquivalenten Pfade die gleiche ist, Bestimmen von S_tref nach folgender Formel $S\_tref = MAX(tref_1, tref_2...tref_k)$, wobei $tref_i$ eine gesammelte Kandidaten-Globalreferenzlatenz eines Pfades i in den äquivalenten Pfaden darstellt, $tref_i = tfix_i + k_{1i} * \Delta t_{1i} + k_{2i} * \Delta t_{2i} + .... + k_{n-1i} * \Delta t_{n-1i} + \Delta t_{ni}$; $tfix_i$ für eine Zwischendomänen-Übertragungslatenz des Pfades i steht, die ein voreingestellter Wert ist; $\Delta t_{ni}$ eine Referenzlatenz einer n-ten DetNet-Domäne im Pfad i darstellt, $k_{n-1i}$ ein Zeitverhältnis einer (n-1)-ten DetNet-Domäne zur letzten DetNet-Domäne im Pfad i darstellt;
wenn der Übertragungspfad keinen gleichwertigen Pfad hat, Bestimmen von S_tref als eine Kandidaten-Globalreferenzlatenz des Übertragungspfades.

10. Verfahren nach Anspruch 9, des Weiteren umfassend das Sammeln der Kandidaten-Globalreferenzlatenz des Übertragungspfades in folgenden Blöcken:

wenn der Netzwerkknoten ein Eingangsknoten einer ersten DetNet-Domäne in dem Übertragungspfad ist, Konstruieren eines Referenzlatenzmesspakets und Senden des Referenzlatenzmesspakets in der ersten DetNet-Domäne; wobei das Referenzlatenzmesspaket mindestens ein Temp-Zeitinformationsfeld trägt, das einen Zeitpunkt trägt, zu dem der gegenwärtige Knoten das Referenzlatenzmesspaket empfängt, und der Zeitpunkt ein Zeitpunkt ist, zu dem das Referenzlatenzmesspaket erfolgreich konstruiert ist;
wenn der Netzwerkknoten ein Eingangsknoten in einer anderen DetNet-Domäne als der ersten DetNet-Domäne in dem Übertragungspfad ist, nach dem Empfangen des Referenzlatenzmesspakets, Erhalten eines Zeitpunkts Time_1, zu dem der Eingangsknoten in einer vorherigen DetNet-Domäne das Referenzlatenzmesspaket empfängt, aus dem Temp-Zeitinformationsfeld des Referenzlatenzmesspakets und Herausgreifen eines Zeitpunkts Time_2, zu dem der Ausgangsknoten in der vorherigen DetNet-Domäne das Referenzlatenzmesspaket sendet, aus einer spezifizierten Position des Referenzlatenzmesspakets, und Aufzeichnen einer Differenz zwischen Time_2 und Time_1 als Verweilzeit der vorherigen DetNet-Domäne in einer Latenzfeld-Verweilzeitliste, die in dem Referenzlatenzmesspaket enthalten ist und dem Eingangsknoten in der vorherigen DetNet-Domäne entspricht; und Aufzeichnen des Zeitpunkts, zu dem der gegenwärtige Knoten das Referenzlatenzmesspaket empfängt, in dem Temp-Zeitinformationsfeld, und Fortsetzen der Übertragung des Referenzlatenzmesspakets entlang des Übertragungspfades;
wenn der Netzwerkknoten ein Ausgangsknoten in der letzten DetNet-Domäne in dem Übertragungspfad ist, Erhalten eines Zeitpunkts t'Ingress, zu dem der Eingangsknoten in der gegenwärtigen DetNet-Domäne das Referenzlatenzmesspaket empfängt, aus dem Temp-Zeitinformationsfeld des Referenzlatenzmesspakets, und Berechnen einer Verweilzeit tres des Referenzlatenzmesspakets in der gegenwärtigen DetNet-Domäne tres = t'Ready - t'Ingress, wobei sich t'Ready auf eine Summe eines Zeitpunkts t'Received, zu dem der gegenwärtige Knoten das Referenzlatenzmesspaket empfängt, und einer Verarbeitungslatenz $\Delta t'$ des gegenwärtigen Knotens bezieht; Melden der tres und der Verweilzeit in jeder Verweilzeitliste, die von dem Referenzlatenzmesspaket getragen wird, an eine Steuerebene, so dass die Steuerebene basierend auf der tres und der Verweilzeit in jeder Verweilzeitliste die Referenzlatenz jeder DetNet-Domäne in dem Übertragungspfad bestimmt, und basierend auf der Referenzlatenz jeder DetNet-Domäne in dem Übertragungspfad eine Kandidaten-Globalreferenzlatenz des Übertragungspfades bestimmt.

**11.** Verfahren nach Anspruch 10, wobei die Kandidaten-Globalreferenzlatenz des Übertragungspfades durch die folgende Formel ausgedrückt wird:

$$tref = tfix + (k_1 {}^* \Delta t_1 + k_2 {}^* \Delta t_2 + \dots + k_{n-1} {}^* \Delta t_{n-1} + \Delta t_n);$$

wobei tfix eine Zwischendomänenlatenz zwischen den DetNet-Domänen in dem Übertragungspfad darstellt, die durch Messung im Voraus erhalten wird; $\Delta t_n$ eine Referenzlatenz der n-ten DetNet-Domäne in dem Übertragungspfad darstellt, und $k_{n-1}$ ein Zeitverhältnis der (n-1)-ten DetNet-Domäne zu der letzten DetNet-Domäne in dem Übertragungspfad darstellt.

**12.** Verfahren nach Anspruch 8, 9 oder 11, wobei ein Zeitverhältnis k der i-ten DetNet-Domäne zur letzten DetNet-Domäne in jedem Pfad in folgenden Blöcken bestimmt wird:

Bestimmen eines Zeitverhältnisses einer spezifizierten Referenztaktquelle zu einer Taktquelle der i-ten DetNet-Domäne als $k_i$';
Bestimmen eines Zeitverhältnisses der spezifizierten Referenztaktquelle zu einer Taktquelle der letzten DetNet-Domäne als $k_n$'; Berechnen von $k_i$ gemäß der folgenden Formel: $k_i = k_i' / k_n'$.

**13.** Elektronische Vorrichtung, die einen Prozessor und ein maschinenlesbares Speichermedium umfasst; wobei

das maschinenlesbare Speichermedium maschinenausführbare Anweisungen speichert, die von dem Prozessor ausführbar sind;
der Prozessor dazu konfiguriert ist, die maschinenausführbaren Anweisungen auszuführen, um ein Verfahren nach einem der Ansprüche 1 bis 12 zu implementieren.

**14.** Maschinenlesbares Speichermedium, das maschinenausführbare Anweisungen speichert, die von einem Prozessor ausführbar sind; wobei,
die maschinenausführbaren Anweisungen von einem Prozessor ausgeführt werden, um ein Verfahren nach einem der Ansprüche 1 bis 12 zu implementieren.

## Revendications

**1.** Procédé de transmission inter-domaines d'un flux de réseau déterministe, DetNet, appliqué à un nœud de réseau dans un domaine DetNet, comprenant :

si le nœud de réseau est un nœud de sortie dans un dernier domaine DetNet que traverse un paquet de données de flux DetNet, la détermination d'une latence de transmission réelle $\Delta t'_n$ du paquet de données de flux DetNet dans le dernier domaine DetNet ;
sur la base des latences de transmission réelles et de $\Delta t'_n$ du paquet de données de flux DetNet quand il traverse d'autres domaines DetNet, la détermination d'un temps à compenser tc, dans lequel la latence de transmission réelle du paquet de données de flux DetNet dans chaque domaine DetNet est déterminée sur la base de la différence entre un point temporel d'entrée auquel le paquet de données de flux DetNet entre dans le domaine DetNet durant la transmission réelle et un point temporel de sortie auquel le paquet de données de flux DetNet quitte le domaine DetNet durant la transmission réelle ;
sur la base du tc et d'un tReady, la détermination d'un cycle d'ordonnancement cible correspondant et le placement du paquet de données de flux DetNet dans une file d'attente d'ordonnancement périodique correspondant au cycle d'ordonnancement cible pour l'ordonnancement et la transmission ; dans lequel tReady fait référence à un point temporel auquel le nœud actuel termine le traitement du paquet de données de flux DetNet sur la base d'une manière de traitement de paquet de données définie.

**2.** Procédé selon la revendication 1, dans lequel, si le nœud de réseau est un nœud d'entrée dans un premier domaine DetNet que traverse le paquet de données de flux DetNet, le procédé comprend en outre :

l'enregistrement d'un point temporel de réception de paquet auquel le nœud actuel reçoit le paquet de données de flux DetNet ;

l'ordonnancement et la transmission du paquet de données de flux DetNet dans le premier domaine DetNet, dans lequel le paquet de données de flux DetNet transporte un champ d'information temporelle Temp et le point temporel de réception du paquet enregistré auquel le nœud actuel reçoit le paquet de données de flux DetNet est transporté dans le champ d'information temporelle Temp.

3. Procédé selon la revendication 1 ou 2, dans lequel, si le nœud de réseau est un nœud d'entrée dans un domaine DetNet autre qu'un premier domaine DetNet que traverse le paquet de données de flux DetNet, le procédé comprend en outre :

la détermination d'une latence de transmission réelle du paquet de données de flux DetNet quand il traverse un domaine DetNet précédent, et l'enregistrement de la latence de transmission réelle déterminée dans un élément d'information qui est transporté dans le paquet de données de flux DetNet et qui correspond au domaine DetNet précédent ;

l'enregistrement du point temporel de réception auquel le nœud actuel reçoit le paquet de données de flux DetNet dans un champ d'information temporelle Temp transporté dans le paquet de données de flux DetNet.

4. Procédé selon la revendication 3, dans lequel la détermination de la latence de transmission réelle du paquet de données de flux DetNet quand il traverse le domaine DetNet précédent comprend :

l'obtention de Time1 à partir du champ d'information temporelle Temp, dans lequel Time1 représente le point temporel de réception de paquet auquel le nœud d'entrée du domaine DetNet précédent reçoit le paquet de données de flux DetNet ;

l'obtention de Time2 à partir d'une position spécifiée du paquet de données de flux DetNet, dans lequel Time2 représente un point temporel d'envoi de paquet auquel un nœud de sortie du domaine DetNet précédent envoie le paquet de données de flux DetNet ;

le calcul d'une différence entre Time2 et Time1, et sur la base de la différence entre Time2 et Time1, la détermination d'une latence de transmission réelle du paquet de données de flux DetNet quand il traverse le domaine DetNet précédent.

5. Procédé selon la revendication 3, dans lequel la détermination de la latence de transmission réelle $\Delta t'_n$ du paquet de données de flux DetNet reçu dans le dernier domaine DetNet comprend :

à partir du champ d'information temporelle Temp, l'obtention d'un point temporel de réception de paquet tIngress auquel un nœud d'entrée dans le dernier domaine DetNet reçoit le paquet de données de flux DetNet ;

le calcul d'une latence de transmission réelle $\Delta t'_n$ du paquet de données de flux DetNet dans le dernier domaine DetNet, dans lequel $\Delta t'_n$ = tReady - tIngress.

6. Procédé selon la revendication 1 ou 5, dans lequel tReady est exprimé par la formule suivante :

$$tReady = tReceived + \Delta t \; ;$$

dans lequel tReceived représente un point temporel de réception auquel le nœud actuel reçoit le paquet de données de flux DetNet, et $\Delta t$ représente une latence de traitement prédéfinie par le nœud actuel.

7. Procédé selon la revendication 1, dans lequel, sur la base de $\Delta t'_n$ et des latences de transmission réelles du paquet de données de flux DetNet quand il traverse d'autres domaines DetNet, la détermination du temps à compenser tc comprend :

sur la base de $\Delta t'_n$, des latences de transmission réelles quand le paquet de données de flux DetNet traverse d'autres domaines DetNet, du $Rate_i$, et d'une valeur de plafond de compensation, le calcul du temps à compenser tc ;

dans lequel le paquet de données de flux DetNet transporte les latences de transmission réelles du paquet de données de flux DetNet quand il traverse d'autres domaines DetNet ; $Rate_i$ représente un nombre de nanosecondes à compenser par milliseconde pour un i-ème domaine DetNet par rapport à un domaine réseau cible, et le domaine réseau cible est le dernier domaine DetNet ; le paquet de données de flux DetNet transporte les Rates d'autres domaines DetNet par rapport au domaine réseau cible et le paquet de données de flux DetNet transporte la valeur de plafond de compensation.

8.  Procédé selon la revendication 7, dans lequel, sur la base de $\Delta t'_n$, des latences de transmission réelles du paquet de données de flux DetNet quand il traverse d'autres domaines DetNet, du $Rate_i$ et de la valeur de plafond de compensation, le calcul du temps à compenser tc comprend :

    le calcul du tc sur la base de la formule suivante :

    $tc = (S\_tref\text{-}tfix) - (k_1{}^*\Delta t'_1 + k_2{}^*\Delta t'_2 + ... + k_{n-1}{}^*\Delta t'_{n-1} + \Delta t'n)$ ;

    dans laquelle (S_tref-tfix) représente la valeur de plafond de compensation, $k_i{}^*\Delta t'_i = Rate_i{}^*(1 + \Delta t'_i/1000)$, et $\Delta t'_i$ représente la latence de transmission réelle du paquet de données de flux DetNet quand il traverse le i-ème domaine DetNet.

9.  Procédé selon la revendication 8, dans lequel S_tref représente une latence de référence globale cible d'un chemin de transmission du paquet de données de flux DetNet ;
    dans lequel S_tref est déterminé par les blocs suivants :

    si le chemin de transmission et les k-1 autres chemins sont des chemins mutuellement équivalents et que la latence de référence globale cible de chacun des chemins équivalents est la même, détermination de S_tref par la formule suivante : $S\_tref = MAX(tref_1, tref_2, ... , tref_k)$, dans laquelle $tref_i$ représente une latence de référence globale candidate collectée d'un chemin i parmi les chemins équivalents, $tref_i = tfix_i + k_{1i}{}^*\Delta t_{1i} + k_{2i}{}^*\Delta t_{2i} + ... + k_{n-1i}{}^*\Delta t_{n-1i} + \Delta t_{ni}$ ; $tfix_i$ représente une latence de transmission inter-domaines du chemin i, qui est une valeur prédéfinie ; $\Delta t_{ni}$ représente une latence de référence d'un n-ième domaine DetNet dans le chemin i, $k_{n-1i}$ représente un ratio de synchronisation d'un (n-1)-ième domaine DetNet par le dernier domaine DetNet dans le chemin i ;
    si le chemin de transmission n'a pas de chemin équivalent, détermination de S_tref comme une latence de référence globale candidate du chemin de transmission.

10. Procédé selon la revendication 9, comprenant en outre la collecte de la latence de référence globale candidate du chemin de transmission dans les blocs suivants :

    si le nœud de réseau est un nœud d'entrée d'un premier domaine DetNet dans le chemin de transmission, construction d'un paquet de mesure de latence de référence et envoi du paquet de mesure de latence de référence dans le premier domaine DetNet ; dans lequel le paquet de mesure de latence de référence transporte au moins un champ d'information temporelle Temp transportant un point temporel auquel le nœud actuel reçoit le paquet de mesure de latence de référence, et le point temporel est un point temporel auquel le paquet de mesure de latence de référence est construit avec succès ;
    si le nœud de réseau est un nœud d'entrée dans un quelconque domaine DetNet autre que le premier domaine DetNet du chemin de transmission, après la réception du paquet de mesure de latence de référence, obtention du point temporel Time_1 auquel le nœud d'entrée dans un domaine DetNet précédent reçoit le paquet de mesure de latence de référence à partir du champ d'information temporelle Temp du paquet de mesure de latence de référence et sélection d'un point temporel Time_2 auquel le nœud de sortie du domaine DetNet précédent envoie le paquet de mesure de latence de référence à partir d'une position spécifiée du paquet de mesure de latence de référence, et enregistrement d'une différence entre Time_2 et Time_1 comme un temps de résidence du domaine DetNet précédent dans une liste des temps de résidence de champ de latence qui est transportée dans le paquet de mesure de latence de référence et correspond au nœud d'entrée dans le domaine DetNet précédent ; et enregistrement du point temporel auquel le nœud actuel reçoit le paquet de mesure de latence de référence dans le champ d'information temporelle Temp, et poursuite de la transmission du paquet de mesure de latence de référence le long du chemin de transmission ;
    si le nœud de réseau est un nœud de sortie dans le dernier domaine DetNet du chemin de transmission, obtention d'un point temporel t'Ingress auquel le nœud d'entrée dans le domaine DetNet actuel reçoit le paquet de mesure de latence de référence à partir du champ d'information temporelle Temp du paquet de mesure de latence de référence, et calcul d'un temps de résidence tres du paquet de mesure de latence de référence dans le domaine DetNet actuel tres = t'Ready-t'Ingress, où t'Ready fait référence à la somme d'un point temporel t'Received auquel le nœud actuel reçoit le paquet de mesure de latence de référence et d'une latence de traitement $\Delta t'$ du

nœud actuel ; rapportage du tres et du temps de séjour dans chaque liste des temps de résidence transportée par le paquet de mesure de latence de référence à un plan de contrôle de sorte que le plan de contrôle, sur la base du tres et du temps de résidence dans chaque liste des temps de résidence, détermine la latence de référence de chaque domaine DetNet dans le chemin de transmission, et sur la base de la latence de référence de chaque domaine DetNet dans le chemin de transmission, détermine une latence de référence globale candidate du chemin de transmission.

11. Procédé selon la revendication 10, dans lequel la latence de référence globale candidate du chemin de transmission est exprimée par la formule suivante :

$$\text{tref} = \text{tfix} + (k_1 * \Delta t_1 + k_2 * \Delta t_2 + \ldots + k_{n-1} * \Delta t_{n-1} + \Delta t_n) \; ;$$

dans laquelle tfix représente une latence inter-domaines entre les domaines DetNet dans le chemin de transmission, qui est obtenue par une mesure préalable ; $\Delta t_n$ représente une latence de référence du n-ième domaine DetNet dans le chemin de transmission, et $k_{n-1}$ représente un ratio de synchronisation du (n-1)-ième domaine DetNet par le dernier domaine DetNet dans le chemin de transmission.

12. Procédé selon la revendication 8, 9 ou 11, dans lequel un ratio de synchronisation $k_i$ du i-ème domaine DetNet par le dernier domaine DetNet dans un chemin quelconque est déterminé dans les blocs suivants :

détermination du ratio de synchronisation d'une source d'horloge de référence spécifiée par une source d'horloge du i-ème domaine DetNet comme étant $k_i$' ;
détermination du ratio de synchronisation de la source d'horloge de référence spécifiée par une source d'horloge du dernier domaine DetNet comme étant $k_n$' ;
calcul de $k_i$ selon la formule suivante : $k_i = k_i'/k_n'$.

13. Dispositif électronique comprenant un processeur et un support de stockage lisible par une machine ; dans lequel

des instructions exécutables par une machine, qui sont exécutables par le processeur, sont stockées sur le support de stockage lisible par une machine ;
le processeur est configuré pour exécuter les instructions exécutables par une machine afin de mettre en œuvre un procédé selon l'une quelconque des revendications 1 à 12.

14. Support de stockage lisible par une machine sur lequel sont stockées des instructions exécutables par une machine qui sont exécutables par un processeur ; dans lequel
les instructions exécutables par une machine sont exécutées par un processeur pour mettre en œuvre un procédé selon l'une quelconque des revendications 1 à 12.

FIG.1

FIG.2

FIG.3

FIG.4

FIG.5

FIG.6

| Flag | Pointer | List Len | Compensation cap |
|---|---|---|---|
| Temp time info | | | |
| GwId0 | Cmd =1 | Rate0 | residence time list [0] |
| GwId1 | Cmd =3 | Rate1 | residence time list [1] |
| GwId2 | Cmd =3 | Rate2 | residence time list [2] |

...

| GwIdn | Cmd =2 | Rate m | residence time list [m] |
|---|---|---|---|

FIG.7

| Flag =3 | Pointer | List Len | 0 |
|---|---|---|---|
| Temp time info(timestamp of GwId0) | | | |
| GwId0 | Cmd =1 | 0 | 0 |
| GwId1 | Cmd =3 | 0 | 0 |

...

| GwId n-1 | Cmd =3 | 0 | 0 |
|---|---|---|---|
| GwIdn | Cmd =2 | 0 | 0 |

FIG.8

| Flag | Pointer | List Len | 0 |
|---|---|---|---|
| Temp time info(ingress timestamp of GwIdn-1) | | | |
| GwId0 | Cmd =1 | 0 | residence time list [0] |
| GwId1 | Cmd =3 | 0 | residence time list [1] |
| ... | | | |
| GwId n-1 | Cmd =3 | 0 | residence time list [n-1] |
| GwIdn | Cmd =2 | 0 | Invalid data(filled 0) |

FIG.9

Deterministic Flow Information Table Of Ingress Node I-Gw

| FlowID | ... | DCTIList |
|---|---|---|
| FlowID1 | ... | ... |
| FlowID2 | ... | ... |
| ... | ... | ... |
| ... | ... | ... |

DCTIList Of FlowID1

| Flag | Pointer | List Len | Compensation cap |
|---|---|---|---|
| Temp time info | | | |
| GwId0 | Cmd =1 | Rate0 | residence time list [0] |
| GwId1 | Cmd =3 | Rate1 | residence time list [1] |
| GwId2 | Cmd =3 | Rate2 | residence time list [2] |
| ... | | | |
| GwIdn | Cmd =2 | Rate m | residence time list [m] |

DCTIList Of FlowID2

| Flag | Pointer | List Len | Compensation cap |
|---|---|---|---|
| Temp time info | | | |
| GwId0 | Cmd =1 | Rate0 | residence time list [0] |
| GwId1 | Cmd =3 | Rate1 | residence time list [1] |
| GwId n-1 | Cmd =3 | Rate n-1 | residence time list [2] |
| ... | | | |
| GwIdn | Cmd =2 | Rate n | residence time list [n] |

FIG.10

28

FIG.11

FIG.12

Ingress Time Get → Infor Process → Egress Process → Elastic Buffer → Tx Schedule

I-Gw

Add Elastic Buffer For The DetNet Flow

FIG.13

$t_{Received}$ $t_{Ready}$

$\Delta t$

Ingress Timestamp Get     Schedule By Cycle

receive → Ingress Process → Egress Process → Schedule &&EOF → transmit

Last E-Gw (GwIdn)

Caculate Time Slot by Time Compensated

CycleQueues

Time Slot

Queue number

Time Slot Map Table

| 0 | Q3 |
| 1 | Q4 |
| 2 | Q3 |
| ... | ... |
| i | Qi |
| ... | ... |
| j | Qj |
| ... | ... |
| n-1 | Qn-1 |

Time Slot Corresponding t2

Time Slot after Compensation

| T0 | Q0 | x | Cycles |
| T1 | Q1 | x + 1 | Cycles |
| ... | ... | ... | |
| Ti | Qi | x + i | Cycles |
| | ... | | |
| Tj | Qj | x + j | Cycles |
| ... | ... | ... | |
| Tn-1 | Qn-1 | x + n-1 | Cycles |

FIG.14

30

| Flag | Pointer | List Len | compensation cap |
|------|---------|----------|------------------|
| Temp time info(ingress timestamp of GwIdn-1) | | | |
| GwId0 | Cmd =1 | Rate0 | residence time list [0] |
| GwId1 | Cmd =3 | Rate1 | residence time list [1] |
| GwId2 | Cmd =3 | Rate n-1 | residence time list [n-1] |
| GwId3 | Cmd =2 | 0 | Invalid data(filled 0) |

FIG.15

State A

| 0 | |
|---|---|
| 1 | |
| 2 | |
| 3 | |
| 4 | |
| 5 | |
| 6 | |
| 7 | |

State B

| 0 | |
|---|---|
| 1 | |
| 2 | |
| 3 | |
| 4 | |
| 5 | |
| 6 | |
| 7 | |

Queue being scheduled

Uncompensated Reception Queue

Compensation Latency

Compensated Reception Queue

FIG.16

First Processing Unit

Second Processing Unit

Apparatus

FIG.17

FIG.18

**REFERENCES CITED IN THE DESCRIPTION**

**Patent documents cited in the description**

- WO 2022237415 A1